(19) Europäisches Patentamt
European Patent Office
Office européen des brevets

(11) EP 4 409 615 B1

(12) **EUROPÄISCHE PATENTSCHRIFT**

(45) Veröffentlichungstag und Bekanntmachung des Hinweises auf die Patenterteilung:
**19.08.2026 Patentblatt 2026/34**

(21) Anmeldenummer: **22782525.4**

(22) Anmeldetag: **22.09.2022**

(51) Internationale Patentklassifikation (IPC):
***H01G 4/18*** $^{(2006.01)}$ ***H01G 4/14*** $^{(2006.01)}$
***H01G 4/30*** $^{(2006.01)}$ ***H01G 4/32*** $^{(2006.01)}$

(52) Gemeinsame Patentklassifikation (CPC):
**H01G 4/18;** H01G 4/14; H01G 4/30; H01G 4/32

(86) Internationale Anmeldenummer:
**PCT/EP2022/076388**

(87) Internationale Veröffentlichungsnummer:
**WO 2023/052235 (06.04.2023 Gazette 2023/14)**

(54) **VERFAHREN ZUR HERSTELLUNG EINES DIELEKTRIKUMS FÜR EINEN KONDENSATOR, VERFAHREN ZUR HERSTELLUNG EINES KONDENSATORS UND KONDENSATOR**

METHOD OF PRODUCING A DIELECTRIC FOR A CAPACITOR, METHOD OF PRODUCING A CAPACITOR AND CAPACITOR

MÉTHODE DE FABRICATION D’UN DIÉLECTRIQUE POUR CONDENSATEUR, MÉTHODE DE FABRICATION D’UN CONDENSATEUR ET CONDENSATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2021 DE 102021125407**

(43) Veröffentlichungstag der Anmeldung:
**07.08.2024 Patentblatt 2024/32**

(73) Patentinhaber:
- **TDK Electronics AG**
  **81671 München (DE)**
- **Polymer Competence Center Leoben Gmbh**
  **8700 Leoben (AT)**

(72) Erfinder:
- **SIX, Birgit**
  **8503 St. Josef (AT)**
- **SAX, Stefan**
  **8054 Graz (AT)**
- **WIESBROCK, Frank**
  **8770 Sankt Michael in Obersteiermark (AT)**
- **HIRNER, Stefan**
  **8010 Graz (AT)**
- **HEUPL, Lukas**
  **4644 Scharnstein (AT)**

(74) Vertreter: **Epping - Hermann - Fischer Patentanwaltsgesellschaft mbH**
**Schloßschmidstraße 5**
**80639 München (DE)**

(56) Entgegenhaltungen:
**WO-A1-2013/085467**
**WO-A1-2016/126291**
**WO-A1-98/27562**
**JP-A- 2015 189 972**
**US-A1- 2018 033 554**
**US-A1- 2018 061 582**

- **XU W ET AL: "Hysteresis-free organic field-effect transistors with high dielectric strength cross-linked polyacrylate copolymer as a gate insulator", ORGANIC ELECTRONICS, ELSEVIER, AMSTERDAM, NL, vol. 11, no. 5, 1 May 2010 (2010-05-01), pages 836 - 845, XP026999934, ISSN: 1566-1199, [retrieved on 20100204]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die Erfindung betrifft das Verfahren zur Herstellung eines Dielektrikums für einen Kondensator, das Verfahren zur Herstellung eines Kondensators sowie einen Kondensator.

Polymerdielektrika oder polymerhaltige Dielektrika finden vielfältige Anwendung in leistungselektronischen Anwendungen, insbesondere in passiven Komponenten wie zum Beispiel in elektrischen Kondensatoren. Durch immer anspruchsvollere Betriebsumgebungen, **z. B.** auf Grund von immer höheren Integrationsdichten in Anwendungen, werden Polymere für Anwendungstemperaturen von 150 °C oder darüber benötigt. Zudem sollen dielektrische Eigenschaften immer weiter verbessert werden, aber auch präzise auf bestimmte technische Anforderungen hin einstellbar sein.

Im Bereich organischer Feldeffekttransistoren wurde in der unten gelisteten Nicht-Patentliteratur 1 für den Isolator der Steuerelektrode (gate insulator) ein polyacrylathaltiges Copolymer vorgeschlagen. Unter anderem wird hierbei offenbart, dass das Material quervernetzt werden kann mittels reaktiver Seitengruppen, welche direkt eine Polymerhauptkette mit einer anderen verbrücken. Es wurde eine vorteilhafte Durchschlagsfestigkeit berichtet.

Nicht-Patentliteratur 1:

Wentao Xu, Shi-Woo Rhee,
Hysteresis-free organic field-effect transistors with high dielectric strength cross-linked polyacrylate copolymer as a gate insulator,
Organic Electronics,
Volume 11, Issue 5,
2010,
Pages 836-845,
ISSN 1566-1199.

Die gegenwärtige Erfindung kann die oben dargelegten Probleme zumindest teilweise lösen. Insbesondere kann ein flexibel anpassbares System erreicht werden. Insbesondere können die Probleme durch den Gegenstand des Anspruchs 1 zumindest teilweise gelöst werden. Weitere Gegenstände oder bevorzugte Ausführungen sind den weiteren Ansprüchen zu entnehmen.

Das Verfahren zur Herstellung eines Kondensators gemäß der Erfindung ist mit den Merkmalen des Anspruchs 1 definiert, der Wickelkondensator gemäß der Erfindung ist mit den Merkmalen des Anspruchs 11 definiert, der Vielschichtkondensator gemäß der Erfindung ist mit den Merkmalen des Anspruchs 12 definiert und das Verfahren zur Herstellung eines Dielektrikums für einen Kondensator gemäß der Erfindung ist mit den Merkmalen des Anspruchs 17 definiert.

Gemäß einem ersten Aspekt wird ein Verfahren zur Herstellung eines Dielektrikums für einen Kondensator angegeben. Dieses Verfahren umfasst das Bereitstellen von Polymerketten mit reaktiven Gruppen, die von der jeweiligen Polymerkette abzweigen. Die reaktiven Gruppen sind dazu geeignet eine kovalente Bindung mit einem Verknüpfermolekül zu bilden. Als weiterer Verfahrensschritt werden Verknüpfermoleküle zu den Polymerketten hinzugegeben, wobei jedes Verknüpfermolekül mindestens zwei chemische Verknüpfungspunkte aufweist, die jeweils dazu geeignet sind eine kovalente Bindung mit einer reaktiven Gruppe zu bilden. Schließlich wird eine Vernetzung unter den Polymerketten bzw. in einer Polymerkette durch Reaktionen bzw. kovalente Verbindung eines Verknüpfermoleküls mit zwei reaktiven Gruppen durchgeführt.

Gemäß dem Verfahren ist es bevorzugt, dass das Bereitstellen von Polymerketten den ersten Verfahrensschritt darstellt. Anschließend ist es bevorzugt, dass das Verknüpfermolekül zugegeben wird. Weiterhin ist bevorzugt, dass die Vernetzung, nach den zwei zuvor beschriebenen Schritten durchgeführt wird.

Als Polymerketten können hier und im Folgenden Polymerhauptketten eines Polymermaterials verstanden werden. Wie durch den Begriff "Polymerhauptkette" betont wird unterscheiden sich die Polymerketten bevorzugt strukturell von Vernetzungen innerhalb einer Polymerkette oder zwischen Polymerketten sowie von Verzweigungen. Polymerketten sind bevorzugt deutlich länger als solche Strukturen. Polymerketten als solche weisen grundsätzlich Wiederholeinheiten auf. Die Polymerketten werden bevorzugt aus Monomeren durch Polymerisation gebildet. Es handelt sich bei den Monomeren bevorzugt um organische Moleküle. Dies kann Teil des Schrittes des Bereitstellens von Polymerketten sein. Es handelt sich bei den Monomeren bevorzugt um Moleküle und noch bevorzugter um organische Moleküle. Nach der Polymerisation kann die aus den Monomeren hervorgehende Struktureinheit innerhalb der Polymerketten als Wiederholeinheit bezeichnet werden. Es wird jedoch darauf hingewiesen, dass der Begriff Wiederholeinheit nicht umfasst, dass eine Periodizität in der Polymerkette enthalten sein muss. Insbesondere für den Fall von Copolymeren oder Terpolymeren, welche aus verschiedenen Monomeren gebildet werden, ist häufig keine Periodizität gegeben. Die Reihenfolge bzw. die Anordnung der Wiederholeinheiten zueinander innerhalb einer Polymerkette ist grundsätzlich nicht begrenzt. Bevorzugt folgt diese einer Normalverteilung. Dies kann z. B. erhalten werden, wenn eine Mischung von

Monomeren gemeinsam polymerisiert wird, was technisch unaufwendig und deshalb bevorzugt sein kann. Weiter wird darauf hingewiesen, dass der Begriff Wiederholeinheit eine Periodizität weder lokal noch über die gesamte Polymerkette ausschließt. Zum Beispiel haben Homopolymere Periodizität. Es können auch Block-Copolymere oder Block-Terpolymere verwendet werden. Diese können zum Beispiel innerhalb eines Blocks Periodizität aufweisen.

Die reaktiven Gruppen sind hierbei bevorzugt jeweils an einer Wiederholeinheit angeordnet. Eine oder mehrere reaktive Gruppe(n) kann bzw. können z. B. kovalent als funktionelle Gruppe(n) an die Wiederholeinheit angebunden sein. Es kann also von Wiederholeinheiten mit reaktiver Gruppe gesprochen werden.

Das vernetzte Material mit bzw. aus vernetzten Polymerketten kann als vernetztes Polymer oder vernetztes Polymermaterial bezeichnet werden.

Die Polymerketten können Verzweigungen aufweisen. Insbesondere die von der Polymerhauptkette abzweigenden reaktiven Gruppen stellen die bevorzugte Art der Verzweigung dar. Es ist weiterhin bevorzugt, dass die als Verzweigungen abzweigenden Gruppen im Vergleich zur Polymerkette kurz sind. Die abzweigenden Gruppen weisen bevorzugt 100 Atome oder weniger auf und weisen noch bevorzugter 20 Atome oder weniger auf.

Zwischen Polymerketten oder innerhalb von Polymerketten können bis zu einem geringen Anteil bereits vor der Vernetzung Querverbindungen bestehen, welche zum Beispiel durch die ursprüngliche Polymerisationsreaktion entstehen können. Ein solcher Vernetzungsgrad ist aber bevorzugt niedriger als die Vernetzung über reaktive Gruppen und Verknüpfermoleküle. Bevorzugt ist der Anteil der Polymerketten die bereits vor der Vernetzung Querverbindungen aufweisen so gewählt, dass die Polymerketten vor der Vernetzung in einem Lösungsmittel, welches bevorzugt ein organisches Lösungsmittel ist, löslich bleiben. Bevorzugt ist der Anteil solcher Verbindungen zwischen Polymerketten zum Beispiel kleiner oder gleich 1 % bezogen auf die Zahl an Wiederholeinheiten der Polymerkette. Dies kann die Löslichkeit erleichtern.

Als reaktive Gruppe wird eine funktionelle Gruppe an der Polymerkette verstanden, welche geeignet ist, über eine chemische Reaktion mit einem Verknüpfungspunkt des Verknüpfermoleküls eine kovalente Bindung einzugehen.

Grundsätzlich können in der Vernetzung mindestens zwei reaktive Gruppen mit einem Verknüpfermolekül reagieren. So können zwei Polymerketten miteinander kovalent verbunden bzw. verknüpft werden. Analog können jedoch auch Bereiche einer einzelnen Kette miteinander verbunden werden. Das letztere ist insbesondere im Fall langer und z. B. gefaltet vorliegender Polymerketten häufig. Bei der Vernetzung ist es bevorzugt, dass eine Vielzahl von kovalenten Bindungen entsteht. Insbesondere ist es bevorzugt, dass in der Vernetzung eine Vielzahl von Reaktionen stattfindet in welchen jeweils ein Verknüpfermolekül mit mindestens zwei reaktiven Gruppen je eine kovalente Verbindung ausbildet.

Gemäß dem oben beschriebenen Verfahren ist es bevorzugt, dass in den Polymerketten zumindest einige Wiederholeinheiten mit reaktiven Gruppen funktionalisiert sind. Die Funktionalisierung kann an den Monomeren, also vor einer Polymerisation, oder an den Wiederholeinheiten in der Polymerkette, also nach der Polymerisation, durchgeführt werden. Grundsätzlich können auch alle Wiederholeinheiten der Polymerkette mit einer reaktiven Gruppe funktionalisiert sein. Es werden in einigen Fällen Copolymere oder Terpolymere bevorzugt, in welchen auch ein Anteil an nicht mit einer reaktiven Gruppe funktionalisierten Wiederholeinheiten neben den mit einer reaktiven Gruppe funktionalisierten Wiederholeinheiten vorliegt. Die "nicht mit einer reaktiven Gruppe funktionalisierten Wiederholeinheiten" bzw. auch analog "nicht mit einer reaktiven Gruppe funktionalisierte Monomere" können als "Wiederholeinheiten ohne reaktive Gruppe", bzw. als "Monomere ohne reaktive Gruppe" bezeichnet werden. In einigen Fällen können nicht kovalent verbundene, also im vernetzten Polymer verbleibende reaktive Gruppen hygroskopisch sein oder mit Feuchtigkeit beziehungsweise Wassermolekülen reagieren. Dies kann die Materialeigenschaften verändern und so die Feuchtigkeitsresistenz oder Feuchtigkeitsstabilität eines Dielektrikums negativ beeinflussen. Entsprechend kann der Anteil an Wiederholeinheiten ohne eine reaktive Gruppe oder bevorzugt mit einer hydrophoben Gruppe bzw. unpolaren Gruppe als Mittel eingesetzt werden, um die Feuchtigkeitsresistenz des Dielektrikums zu verbessern.

Grundsätzlich kann gemäß der Erfindung auch mehr als eine reaktive Gruppe an einer Wiederholeinheit mit reaktiver Gruppe angeordnet sein. In einem solchen Fall ist es insbesondere bevorzugt, dass sich die Richtung der reaktiven Gruppen, die von der Hauptkette abzweigen, unterscheidet. Zum Beispiel können solche Gruppen an einer Polymerkette gegenüberstehend angeordnet sein. Insbesondere ist jedoch besonders bevorzugt, dass die Wiederholeinheiten mit reaktiver Gruppe jeweils nur eine einzelne reaktive Gruppe tragen. Dies ist bevorzugt, da so die Verknüpfungsstellen gleichmäßiger über die Polymerkette verteilt sein können, als wenn einige wenige Wiederholeinheiten eine Vielzahl von reaktiven Gruppen aufweisen. So können stark geballte Knotenpunkte verhindert werden. So kann ein homogeneres Polymermaterial erhalten werden.

Es ist möglich über den Anteil an reaktiven Gruppen oder durch den Anteil an Wiederholeinheiten mit einer einzelnen reaktiven Gruppe an der Gesamtpolymerkette eine erste Steuerungsmöglichkeit für den Gesamtvernetzungsgrad (absoluter Vernetzungsgrad) im Dielektrikum zu erhalten.

Eine weitere Steuerungsmöglichkeit des Gesamtvernetzungsgrads ergibt sich über die Zugabe der Verknüpfermoleküle. Der maximal mögliche absolute Vernetzungsgrad für eine Polymerkette bzw. für die Polymerketten kann durch die Anzahl an reaktiven Gruppen definiert sein. Durch die Menge an Verknüpfermolekülen kann der Vernetzungsgrad eingestellt werden, solange die Menge an Verknüpfermolekülen höchstens ausreichend ist, um mit allen vorhandenen

reaktiven Gruppen zu reagieren bzw. sich mit diesen kovalent zu verbinden.

Hierbei kann ein relativer Vernetzungsgrad definiert werden. Der relative Vernetzungsgrad ist der Anteil an reaktiven Gruppen, die mit einem Verknüpfermolekül kovalent verbunden sind bzw. werden. Anders ausgedrückt wird hierdurch das Verhältnis der Zahl an reaktiven Gruppen, die mit einem Verknüpfermolekül kovalent verbunden sind, zur Gesamtzahl an vor dem Vernetzungsschritt vorliegenden reaktiven Gruppen bezeichnet. Alternativ zur Gesamtzahl an vor dem Vernetzungsschritt vorliegenden reaktiven Gruppen, kann auch die Summe aus nach der Vernetzung nicht mit einem Verknüpfermolekül kovalent verbundenen reaktiven Gruppen und der Zahl an reaktiven Gruppen, die die mit einem Verknüpfermolekül kovalent verbunden sind, in der Gleichung als Nenner verwendet werden. Weiterhin kann ein absoluter Vernetzungsgrad definiert werden. Der absolute Vernetzungsgrad ist der Anteil an Quervernetzungen pro allen Wiederholeinheiten einer Polymerkette. Es wird hierbei darauf hingewiesen, dass eine Wiederholeinheit, welche mit mehreren reaktiven Gruppen funktionalisiert ist, mehrere Quervernetzungen bewirken kann. Entsprechend können in diesem Fall pro solcher Wiederholeinheit mehr als eine Quervernetzung in den absoluten Vernetzungsgrad eingehen.

Die Verknüpfungspunkte an dem Verknüpfermolekül sind bevorzugt funktionelle Gruppen an dem Verknüpfermolekül, die geeignet sind mit mindestens einer reaktiven Gruppe eine kovalente Bindung auszubilden. Das Ausbilden einer solchen Bindung kann in Bezug auf den Prozess auch als Vernetzungsreaktion bezeichnet werden. Hierbei können grundsätzlich Einfachbindungen oder Mehrfachbindungen ausgebildet werden. Auch Mehrfachbindungen gehen nur als eine Verbindung in die oben definierten Vernetzungsgrade ein.

Es ist bevorzugt, dass Verknüpfungspunkte eines Verknüpfermoleküls an diesem räumlich voneinander getrennt sind. Zum Beispiel können zwei Verknüpfungspunkte an zwei unterschiedlichen Atomen des Verknüpfermoleküls angebunden sein. Grundsätzlich ist es möglich, dass ein Verknüpfungspunkt zu mehr als einer einzigen reaktiven Gruppe eine kovalente Bindung ausbilden kann. Es wird hier angemerkt, dass auch eine solche Mehrfachverknüpfung in den absoluten Vernetzungsgrad mit der Anzahl an ausgebildeten kovalenten Bindungen eingeht.

Die Erfinder der gegenwärtigen Erfindung haben herausgefunden, dass über den relativen und absoluten Vernetzungsgrad eine Temperaturstabilität des Polymerdielektrikums eingestellt werden kann. Somit kann ein mit einem erfindungsgemäßen Verfahren hergestelltes Polymerdielektrikum eine hohe Temperaturstabilität aufweisen. Insbesondere kann die Temperaturstabilität einen Einsatz des Dielektrikums bei 150 °C oder darüber erlauben. Weiterhin wurde erkannt, dass über den relativen und den absoluten Vernetzungsgrad die Temperaturstabilität des Verlustfaktors und die Höhe der Dielektrizitätskonstante, auch als Permittivität bezeichnet, beeinflusst, bzw. eingestellt werden kann. Es können hierbei Dielektrika mit Dielektrizitätskonstanten von 3,0 oder darüber erhalten werden.

Hierbei ist die einfache und präzise Einstellung beider Vernetzungsgrade relevant, da ein zu niedriger absoluter Vernetzungsgrad eine zu niedrige Temperaturstabilität bewirken kann, beispielsweise wenn die an der Vernetzungsreaktion beteiligten reaktiven Gruppen durch die Vernetzungsreaktion zu temperaturstabileren Analoga umgesetzt werden. Ein zu hoher absoluter Vernetzungsgrad kann jedoch das Dielektrikum beziehungsweise das Polymermaterial des Dielektrikums spröde werden lassen, wodurch es mechanischen Belastungen nicht ausreichend widerstehen kann.

Nachdem gemäß dem erfindungsgemäßen Prozess zwei Komponenten, nämlich Polymere mit reaktiven Gruppen und Verknüpfermoleküle, an der Vernetzung beteiligt sind, kann hier von einem Zwei-Komponentensystem gesprochen werden. Die Einstellung des absoluten Vernetzungsgrades kann über zwei Komponenten präziser und in einem großtechnischen Gesamtprozess einfacher durchgeführt werden, als in einem Ein-Komponentensystem. In einem Ein-Komponentensystem ist zum Beispiel nur eine reaktive Gruppe an einem Polymer vorgesehen um direkt mit einer anderen reaktiven Gruppe oder einer Polymerkette eine Quervernetzung zu bilden. Folglich kann der gegenwärtige erfindungsgemäße Prozess, welcher ein Zwei-Komponentensystem ist, gegenüber dem Ansatz gemäß der Nichtpatentliteratur 1, welcher ein Ein-Komponentensystem beschreibt, den Vorteil haben, dass eine höhere Fehlertoleranz bei den einzelnen Prozessschritten besteht. Zum Beispiel besteht beim erfindungsgemäßen Prozess eine breite Fehlertoleranz bezüglich des Anteils an reaktiven Gruppen bzw. des Anteils an Wiederholeinheiten welche mit einer reaktiven Gruppe funktionalisiert sind. Über die Zugabemenge der Verknüpfermoleküle, welche ohne großen technischen Aufwand präzise möglich ist, kann der finale Grad der Quervernetzung präzise eingestellt werden kann. Man kann Grundeigenschaften des Dielektrikums gezielt durch die Auswahl der Monomere festlegen und durch die Wahl des Verknüpfermoleküls eine Feineinstellung von Eigenschaften vornehmen.

Weiterhin haben die Erfinder der gegenwärtigen Erfindung erkannt, dass durch die Auswahl der reaktiven Gruppen und des Verknüpfermoleküls beziehungsweise durch die dadurch entstehende verbrückende kovalente Verbindung die dielektrischen Eigenschaften des Materials beeinflusst beziehungsweise eingestellt werden können. Insbesondere haben die Erfinder erkannt, dass mit einem hohen relativen und absoluten Vernetzungsgrad die Dielektrizitätskonstante zunehmen kann.

Wie oben dargelegt, kann ein Teil der reaktiven Gruppen unverbunden also unreagiert verbleiben. Die Erfinder der gegenwärtigen Erfindung haben festgestellt, dass reagierte und unreagierte reaktive Gruppen die dielektrischen Eigenschaften des Dielektrikums unterschiedlich beeinflussen. Insbesondere können reagierte reaktive Gruppen, also die Etablierung von Quervernetzungen, die Temperaturstabilität und den Verlustfaktor verbessern. Mittels verbleibender unreagierter reaktiver Gruppen kann die Dielektrizitätskonstante erhöht werden. Die Erfinder der gegenwärtigen Er-

findung haben somit erkannt, dass es in vielen Fällen vorteilhafter sein kann einen Anteil unreagierter reaktiver Gruppen im Dielektrikum zu belassen, um die dielektrischen Eigenschaften des Materials einzustellen und insbesondere die Dielektrizitätskonstante zu erhöhen. Dies hat den Vorteil, dass derselbe Typ an funktionellen Gruppen an den Polymerketten verwendet werden kann, um zum einen Quervernetzungen herzustellen, wobei der genaue Anteil an reagierten und nicht-reagierten Gruppen über das Verknüpfermolekül eingestellt wird, und zum anderen um dielektrischen Eigenschaften zu definieren. Hierbei kann eine aufwendige Funktionalisierung mit verschiedenen funktionellen Gruppen, von welchen die einen zur Einstellung der Quervernetzung und die anderen zur Einstellung von dielektrische Eigenschaften verantwortlich sind, vermieden werden. Gemäß einem solchen Ansatz ist es bevorzugt, dass der Anteil an unreagierten Verknüpfermolekülen gering und bevorzugt im technisch umsetzbaren Rahmen null bleibt.

Gemäß einem bevorzugten Aspekt beträgt ein Anteil von Wiederholeinheiten mit einer reaktiven Gruppe bezogen auf alle Wiederholeinheiten zwischen 20 % und 100 %.

Über den oben angegebenen Anteil an Wiederholeinheiten in den Polymerketten mit einer reaktiven Gruppe kann der relative und der absolute Vernetzungsgrad vorteilhaft eingestellt werden, um eine ausreichende Temperaturstabilität zu gewährleisten und die dielektrischen Eigenschaften anzupassen. Der oben definierte Anteil ist insbesondere bevorzugt, wenn an Wiederholeinheiten mit einer reaktiven Gruppe nur eine einzelne solche Gruppe angebracht ist. Ein Anteil von 40 % und 70 % an Wiederholeinheiten mit einer reaktiven Gruppe ist besonders bevorzugt. Hier sind die oben genannten Effekte besonders ausgeprägt.

Gemäß einem weiteren bevorzugten Aspekt kann ein Anteil an reaktiven Gruppen, welche mit einem Verknüpfermolekül kovalent verbunden sind bzw. werden, zwischen 25 und 99 % betragen. Der relative Vernetzungsgrad kann also zwischen 25 % und 99 % betragen. Für diesen relativen Vernetzungsgrad wurde herausgefunden, dass sowohl die dielektrischen Eigenschaften als auch die Temperaturstabilität vorteilhaft sein kann. Insbesondere wurde herausgefunden, dass ein Anteil von Wiederholeinheiten mit einer reaktiven Gruppe, wie er oben definiert ist, zusammen mit dem hier angegebenen relativen Vernetzungsgrad das Erreichen einer Temperaturstabilität von über 150° C erleichtert.

Um Stabilität und dielektrische Eigenschaften bei höheren Temperaturen zu verbessern, ist es besonders bevorzugt, wenn der relative Vernetzungsgrad zwischen 70 % und 99 % beträgt. Es ist noch bevorzugter, wenn der relative Vernetzungsgrad zwischen 95 % und 99 % beträgt. Für den bevorzugten bzw. noch bevorzugteren Bereich sind die technischen Effekte besonders ausgeprägt.

Weiterhin wird bevorzugt, dass ein absoluter Vernetzungsgrad, also der Anteil an kovalenten Verbindungen pro Gesamtzahl an Wiederholeinheiten auf 5 bis 99 % eingestellt wird. Noch bevorzugter liegt der absolute Vernetzungsgrad zwischen 18% und 60%. Noch mehr bevorzugt liegt der absolute Vernetzungsgrad zwischen 40% und 60%. Hierdurch können die oben genannten Ziele noch besser erreicht werden. Dieser Bereich ist besonders bevorzugt, wenn an Wiederholeinheiten mit reaktiver Gruppe nur eine einzige solche Gruppe angeordnet ist.

Es ist für das Verfahren bevorzugt, dass zumindest ein Teil der Wiederholeinheiten mit einer reaktiven Gruppe, Acrylatwiederholeinheiten oder Wiederholeinheiten, die auf Acrylaten basieren sind. Bevorzugt kann die reaktive Gruppe mittels der Acrylatfunktion über eine Esterbindung oder analog über eine Amidbindung an der Acrylatwiederholeinheit bzw. acrylatbasierten Wiederholeinheit angebunden sein.

Es ist bevorzugt, dass die Polymerketten mit Acrylatmonomeren gebildet werden. Durch die Polymerisation werden diese in der Polymerkette zu Acrylatwiederholeinheiten. Ein bevorzugtes Verfahren ist hierbei radikalische Polymerisation.

Über die Esterbindung kann eine reaktive Gruppe angebracht sein. Somit können die Monomere bzw. Wiederholeinheiten mit einer reaktiven Gruppe Acrylatmonomere bzw. Acrylatwiederholeinheiten umfassen. Noch bevorzugter sind alle Wiederholeinheiten mit einer reaktiven Gruppe Acrylatwiederholeinheiten.

Die Erfinder der gegenwärtigen Erfindung haben herausgefunden, dass Polymerketten bzw. Copolymerketten, welche Acrylatwiederholeinheiten enthalten, besonders gut zur Funktionalisierung mit reaktiven Gruppen geeignet sind, da diese über die Esterbindung chemisch einfach angebunden werden können.

Gemäß einem bevorzugten Aspekt enthält die reaktive Gruppe ein Epoxid. Hierbei enthalten die Verknüpfermoleküle funktionelle Gruppen, welche geeignet sind mit einem Epoxid zu reagieren. Insbesondere und bevorzugt können die funktionellen Gruppen ausgewählt aus Carbonsäuren, Aminen, Alkoholen und Anhydriden sein.

Bevorzugt ist das Epoxid eine terminale Gruppe. In anderen Worten ist es bevorzugt, wenn der Epoxy-Sauerstoff ein terminales Kohlenstoffatom mit einem benachbarten Kohlenstoffatom verbrückt. Dies hat den Vorteil, dass die Epoxygruppe sterisch gut zugänglich ist, was zu einer effizienten Vernetzungsreaktion beiträgt. Zum Beispiel kann es sich um eine Gylcidyl-Gruppe handeln. Diese kann bevorzugt in Form von Glycidylmethacrylatmonomeren als Homo- oder Copolymer in die Polymerketten eingebracht werden. In der polymerisierten Polymerkette kann von Glycidylmethacrylatwiederholeinheiten gesprochen werden.

Über die Reaktion eines Epoxids mit den oben genannten Gruppen kann leicht eine Vernetzung erreicht werden. Leicht kann in diesem Fall insbesondere bedeuten, dass über mildes thermisches Erwärmen auf 30 °C bis 150 °C eine stöchiometrisch vollständige Vernetzungsreaktion erreicht werden kann. Somit kann der absolute und relative Vernetzungsgrad präzise eingestellt werden.

Mit einem Epoxid als reaktiver Gruppe sind die oben angegebenen Werte für den Anteil an Monomeren bzw. Wiederholeinheiten mit reaktiver Gruppe und für den relativen Vernetzungsgrad besonders bevorzugt.

Grundsätzlich kann eine mit zwei Komponenten durchgeführte Verknüpfung auch im sogenannten Grafting-From-Typ durchgeführt werden. Dies ist insbesondere im Zusammenhang mit der Verwendung von Epoxiden möglich. Insbesondere kann eine reaktive Gruppe an der Polymerkette über eine Reaktion, die ansonsten üblicherweise als Polymerisationsreaktion dienen kann, dazu verwendet werden, zwei Ketten miteinander zu verbinden. Insbesondere können mehrere kleine Moleküle ausgehend von einer reaktiven Gruppe oligomerartige oder polymerartige Strukturen hin zu einer weiteren reaktiven Gruppe an einer anderen Polymerkette bilden. Alternativ können durch den gleichen Reaktionstyp Verbindungen innerhalb einer Kette hergestellt werden. So kann zum Beispiel eine terminale Epoxidgruppe nach beispielsweise kationischer Initiierung mit Epoxidmonomeren, wie zum Beispiel Ethylenoxid, Propylenoxid oder Epoxybutan, reagieren.

Nach einem anderen bevorzugten Aspekt kann die Vernetzung, also die Ausbildung von zumindest einigen kovalenten Bindungen zwischen reaktiven Gruppen und den Verknüpfungspunkten über eine $S_N1$ oder $S_N2$-Reaktion ablaufen, beziehungsweise eine solche Reaktion kann beteiligt sein.

Als $S_N1$- oder $S_N2$-Reaktion sollen hier alle Reaktionen subsumiert werden, insbesondere auch Reaktionen der Carbonsäurehalogenide, die nach einem Additions-Eliminierungsmechanismus verlaufen, in welcher eine Abgangsgruppe beteiligt ist und ein Nukleophil an einem Kohlenstoffatom, von welchem die Abgangsgruppe abgegangen ist beziehungsweise von welchem die Abgangsgruppe während des Prozesses abgeht, angreifen kann.

Bevorzugt weist die reaktive Gruppe die Abgangsgruppe auf. Das Verknüpfermolekül enthält hierbei bevorzugt nukleophile Stellen bzw. nukleophile funktionelle Gruppen als Verknüpfungspunkte.

Ein Beispiel für eine Abgangsgruppe kann zum Beispiel ein Halogen an einem Kohlenstoff, aber auch ein Sauerstoff in einem Epoxid sein. Als Nukleophil können beispielsweise Amine oder Alkohole wirken. Alternativ können auch Carbonsäurehalogenide eingesetzt werden. Dies kann insbesondere auch bevorzugt im Bereich von Grafting-From-Reaktionen erfolgen.

Gemäß einer weiteren bevorzugten Ausführung kann an der Vernetzung eine Markownikow-Addition oder eine Anti-Markownikow-Addition beteiligt sein. Die Anti-Markownikow-Addition ist bevorzugt.

Beispiel einer besonders bevorzugten Anti-Markownikow-Addition kann eine Thiol-en Klick-Reaktion eines Thiols mit einer Kohlenstoffkohlenstoffdoppelbindung eines Alkens unter Bildung eines Thioethers sein. Im Fall einer Thiol-en Klick-Reaktion ist es sowohl bevorzugt, dass die reaktive Gruppe das Thiol ist und das Verknüpfermolekül als Verknüpfungspunkte Kohlenstoffkohlenstoffdoppelbindungen aufweist, als auch, dass das Verknüpfermolekül Thiolgruppen als Verknüpfungspunkte aufweist und Kohlenstoffkohlenstoffdoppelbindungen die reaktiven Gruppen darstellen.

Grundsätzlich können für das erfindungsgemäße Verfahren eine Vielzahl verschiedener reaktiver Gruppen und Verknüpfermoleküle verwendet werden, welche innerhalb eines Systems auch nebeneinander vorliegen können. Grundsätzlich kann ein Verknüpfermolekül auch chemisch verschiedene Verknüpfungspunkte aufweisen. Dies ist in einigen Fällen sogar bevorzugt und kann zum Einstellen dielektrischer Eigenschaften dienen. Jedoch ist es bevorzugt, dass alle Verknüpfungspunkte mit allen im System anwesenden reaktiven Gruppen unter ähnlichen beziehungsweise gleichen Reaktionsbedingungen die kovalenten Bindungen ausbilden können. Dadurch können verschiedene Bedingungen für die Vernetzung im Prozess vermieden werden und der Prozess kann technisch einfach gestaltet werden. Weiterhin ist es noch bevorzugter, dass nur eine einzelne Sorte an reaktiven Gruppen in einem System anwesend ist und nur eine einzelne Sorte an Verknüpfungspunkten zugegeben wird. Dies ist bevorzugt um unerwartete Nebenreaktionen zu vermeiden und insbesondere die Zusammensetzung einfach zu halten. Somit können zum Beispiel als reaktive Gruppe Epoxide eingesetzt werden. Es können ausschließlich Epoxide eingesetzt werden. Hierbei können die Epoxide auch Teil unterschiedlicher funktioneller Gruppen sein. Entsprechend kann ein einziger Typ Verknüpfungspunkte in dem System vorkommen, zum Beispiel können ausschließlich Amine oder stattdessen ausschließlich Carbonsäuren als Verknüpfungspunkte vorkommen. Die Verknüpfermoleküle können sich aber unterscheiden.

Wie oben dargelegt kann auch in einem einfachen System mit nur einer einzigen Sorte an reaktiven Gruppen und einer einzigen Sorte an Verknüpfermolekülen bereits eine gute Steuerung des Vernetzungsgrades und der dielektrischen Eigenschaften sowie der Temperaturstabilität erfolgen.

Gemäß einem bevorzugten Aspekt weist das Verfahren einen Schritt der Abscheidung aus Lösung oder der reaktiven Extrusion auf.

In dem Verfahren kann das
Dielektrikum also durch oder mit Abscheidung aus Lösung oder durch oder mit reaktiver Extrusion gebildet werden.

Das erfindungsgemäße Verfahren ist sehr flexibel und kann somit auf diese beiden Abscheidungsmethoden angewandt bzw. angepasst werden.

Das Abscheiden aus Lösung kann vor der Quervernetzung durchgeführt werden. Z.B. kann eine Lösung enthaltend Polymerketten und Verknüpfermolekül auf ein Substrat oder eine Elektrode abgeschieden werden. Nach dem Abscheiden kann die Vernetzung erfolgen.

Grundsätzlich ist es bevorzugt, dass das Dielektrikum als Schicht, also als Dielektrikumsschicht gebildet wird.

Insbesondere ist ein Homo- oder ein Copolymer mit Acrylatwiederholeinheiten bevorzugt, um sowohl Abscheidung aus Lösung als auch reaktive Extrusion zur Herstellung des Dielektrikums einsetzen zu können. Ein Copolymer ist hierbei besonders bevorzugt.

Dies kann insbesondere als Vorteil gegenüber dem häufig verwendeten biaxial verstreckten Polypropylen BOPP gesehen werden, welches üblicherweise nur durch Folienziehen hergestellt wird.

Gemäß einem weiteren bevorzugten Aspekt des Verfahrens ist die Polymerkette ein Copolymer aufweisend Acrylatwiederholeinheiten und Wiederholeinheiten mit einer unpolaren oder ungesättigten Kohlenwasserstoffgruppe. Ein Anteil an Acrylatwiederholeinheiten beträgt bevorzugt 20 bis 80 **%.** Noch bevorzugter kann ein Anteil an Acrylatwiederholeinheiten in einem entsprechenden Copolymer zwischen 40 und 60 % betragen. Noch bevorzugter kann ein solcher Anteil zwischen 45 und 55 % betragen.

Im Copolymer weisen Acrylatwiederholeinheiten die oben dargelegten Vorteile auf. Über den Anteil an Wiederholeinheiten mit einer unpolaren oder ungesättigten Kohlenwasserstoffgruppe kann die Wasseraufnahme reduziert bzw. die Feuchtigkeitsbeständigkeit verbessert werden.

Gemäß einem weiteren bevorzugten Aspekt kann die Vernetzung durch Tempern bei einer Temperatur erfolgen, die dazu geeignet ist, eine Vernetzungsreaktion zu bewirken. Weiterhin ist es hierbei bevorzugt, dass die Temperatur dazu geeignet ist, dass die Vernetzungsreaktion zu mindestens 99 % bezogen auf die bezüglich Reaktionsäquivalente in geringerem Anteil vorhandene Komponente ausgewählt aus reaktiven Gruppen und Verknüpfermolekülen abläuft.

In anderen Worten ausgedrückt, ist entweder der Anteil an reaktiven Gruppen oder der Anteil an Verknüpfermolekülen bezogen auf eine vollständig ablaufende Reaktion im Unterschuss vorhanden. Bevorzugt ist das Verknüpfermolekül im Unterschuss vorhanden. Die Tempertemperatur soll hierbei geeignet sein eine zu mindestens 99 % vollständige Reaktion bezogen auf die im Unterschuss vorhandene Komponente zu bewirken. Noch bevorzugter ist die Tempertemperatur geeignet eine stöchiometrisch vollständige Reaktion im technisch realisierbaren Rahmen zu bewirken.

Vernetzung unter Ausbilden der kovalenten Verbindungen ist durch Tempern technisch unaufwendig möglich.

Gemäß eines weiteren Aspekts wird ein Verfahren zur Herstellung eines Kondensators angegeben. Das Verfahren zur Herstellung eines Kondensators umfasst die Herstellung eines Dielektrikums gemäß dem oben beschriebenen Verfahren. Weiterhin umfasst das Verfahren die Herstellung einer Dielektrikumsschicht mit oder aus dem Dielektrikum. Weiterhin wird eine Elektrode an einer Seite der Schicht angebracht. Es können auch beidseitig der Schicht Elektroden angebracht werden. Ein technisch funktionsfähiger Kondensator weist zwei Elektroden auf, von welcher jedoch nur eine in direktem Kontakt mit der Dielektrikumsschicht stehen muss.

In vielen Ausführungsformen ist es bevorzugt, dass beide Elektroden in direktem Kontakt mit der Dielektrikumsschicht stehen. In diesem Fall ist es oft bevorzugt, dass die Elektroden die Dielektrikumsschicht sandwichartig umschließen.

Bevorzugt wird das Dielektrikum, **z.B.** mit den oben genannten Methoden als Dielektrikumsschicht ausgebildet.

Der Prozess für den Kondensator und der damit hergestellte Kondensator weisen die gleichen Vorteile auf, wie die oben zum Prozess zur Herstellung des Dielektrikums für einen Kondensator geschilderten.

Das Anbringen einer Elektrode an einer Seite der Dielektrikumsschicht kann hierbei bevorzugt bedeuten, dass die Elektrode direkt auf der Schicht aufgebracht wird.

Bevorzugt besteht das gesamte Dielektrikum bis auf technisch unvermeidbare Verunreinigungen, wie zum Beispiel Radikalstarter oder ähnliche Rückstände, ausschließlich aus dem quervernetzten Polymermaterial.

Gemäß einem weiteren bevorzugten Aspekt wird ein Kondensator bereitgestellt. Bevorzugt kann eine Dielektrikumsschicht des Kondensators mit dem oben beschriebenen Verfahren hergestellt werden. Noch bevorzugter kann der Kondensator mit dem zuletzt beschriebenen Verfahren hergestellt werden.

Der Kondensator weist mindestens eine Elektrode auf, welche an der Dielektrikumsschicht angeordnet ist. Alternativ können zwei Elektroden an beiden Seiten der Dielektrikumsschicht angeordnet sein. Die Dielektrikumsschicht weist ein Polymermaterial auf, in welchem Polymerhauptketten über verbrückende Verknüpfermoleküle kovalent miteinander oder mit sich selbst verbunden sind.

Nachdem der Kondensator bevorzugt mit dem oben dargestellten Verfahren hergestellt wird, können in dem vernetzten Polymermaterial bevorzugt Polymerhauptketten identifiziert werden, welche als Bausteine die aus Monomeren gebildeten Wiederholeinheiten aufweisen beziehungsweise aus diesen bestehen. Die Polymerhauptketten weisen bevorzugt von diesen abzweigende Seitengruppen auf, welche zu einer weiteren Polymerhauptkette oder zu einer anderen Stelle derselben Polymerhauptkette eine Quervernetzung bilden. Eine abzweigende Seitengruppe umfasst hierbei bevorzugt mindestens eine reagierte reaktive Gruppe, ein daran angebundenes reagiertes Verknüpfermolekül und eine weitere reaktive Gruppe, die an einer anderen Stelle des reagierten Verknüpfermoleküls angeordnet ist. Besonders bevorzugt entsprechen hier die Verknüpfermoleküle den oben genannten Verknüpfermolekülen. Weiterhin sind die funktionellen Gruppen, an welche die Verknüpfermoleküle im Polymermaterial angebunden sind, bevorzugt reagierte reaktive Gruppen, wie sie oben beschrieben sind.

Bevorzugt kann ein erfindungsgemäßer Kondensator neben den reagierten reaktiven Gruppen auch nicht reagierte reaktive Gruppen aufweisen. Dies hat die oben genannten Vorteile.

Gemäß einem bevorzugten Aspekt beträgt der Anteil an Wiederholeinheiten, an welche ein Verknüpfermolekül kovalent gebunden ist, zwischen 5 % und 99 **%.** Hierbei handelt es sich um den absoluten Vernetzungsgrad, wie er oben definiert ist.

Der absolute Vernetzungsgrad ist bevorzugt 18% bis 60% und noch bevorzugter 40% bis 60%.

In dem oben genannten Bereich des absoluten Vernetzungsgrads kann eine gute Temperaturstabilität erreicht werden, die einen Betrieb des Kondensators bei 150°C oder darüber erlaubt.

Gemäß einem bevorzugten Aspekt enthalten die Polymerhauptketten Acrylatwiederholeinheiten, wobei funktionelle Gruppen, welche kovalent an ein Verknüpfermolekül gebunden sind oder sich zu einer solchen Bindung eignen, über eine Esterbindung an den Acrylatwiederholeinheiten angebunden sind.

Die Polymerkette kann somit ein Homo- oder Copolymer aufweisend Acrylatwiederholeinheiten sein.

Die zur verbrückenden Vernetzung geeigneten funktionellen Gruppen umfassen hierbei bevorzugt reagierte und nicht reagierte reaktive Gruppen. Wie oben dargelegt, haben Acrylatwiederholeinheiten den Vorteil, dass die Estergruppe die Anbindung von zur Vernetzung geeigneten funktionellen Gruppen, also im Sinne des oben beschriebenen Verfahrens von reaktiven Gruppen, ermöglicht.

Gemäß einem weiteren bevorzugten Aspekt beträgt der Anteil an Wiederholeinheiten, welche mit einem Verknüpfermolekül über eine funktionelle Gruppe kovalent verbunden sind relativ zu der Summe aus diesen Wiederholeinheiten und den Wiederholeinheiten mit einer funktionellen Gruppe, die sich zur kovalenten Verbindung zu einem Verknüpfermolekül eignet, zwischen 25% und 99 **%.**

Wie oben dargelegt, kann dies dem relativen Vernetzungsgrad entsprechen, für den Fall, wenn jede Wiederholeinheit mit einer reaktiven Gruppe nur eine einzige solche Gruppe aufweist. Es ergeben sich die oben dargelegten Vorteile. Die Vorteile sind insbesondere für den Fall ausgeprägt, wenn Acrylatwiederholeinheiten mit reaktiven Gruppen bzw. verknüpfenden funktionellen Gruppen enthalten sind.

Gemäß einem weiteren bevorzugten Aspekt ist die kovalente Verbindung bzw. die kovalent verbindende funktionelle Gruppe ausgewählt aus einer Etherbrücke, einer Esterbrücke, einer Aminbrücke, Amidbrücke und einer Thioetherbrücke.

Diese kovalent verbindenden Brücken entsprechen bevorzugt den durch die oben genannten Prozesse hergestellten kovalenten Verknüpfungen. Somit ergeben sich die entsprechenden Vorteile.

Gemäß einem weiteren bevorzugten Aspekt ist der Kondensator ein Vielschicht-Bauteil, auch Multilagenbauteil genannt. Das Vielschicht-Bauteil enthält eine Vielzahl von Elektroden, welche abwechselnd mit den Dielektrikumsschichten gestapelt vorliegen. Die Elektroden werden hierbei bevorzugt über Außenelektroden kontaktiert. In einem Vielschichtbauteil kann eine Laminierrichtung definiert werden. Die Schichten des Vielschichtbauteils sind bevorzugt senkrecht zu dieser ausgerichtet.

Ein Vielschicht-Bauteil kann bevorzugt als sogenanntes SMD-Bauteil (engl. surface mounted device) eingesetzt werden.

Gemäß einem anderen bevorzugten Aspekt ist der Kondensator ein Wickelkondensator. Ein Wickelkondensator weist bevorzugt ausschließlich zwei Elektroden auf, zwischen denen eine Dielektrikumsschicht sandwichartig eingeschlossen ist. Diese sandwichartige Struktur ist zu einer Kondensatorrolle aufgewickelt.

Gemäß einem weiteren Aspekt ist auch die Verwendung eines oben beschriebenen Materials in einem Dielektrikum beschreiben. Zudem ist auch die Verwendung eines Dielektrikums in einem Kondensator beschrieben. Das Dielektrikum weist hierbei die oben dargelegten Merkmale auf oder ist mit dem oben dargelegten Prozess hergestellt.

Im Folgenden wird die Erfindung anhand von Ausführungsbeispielen und unter Bezugnahme auf die Figuren genauer beschrieben. Die Figuren umfassen hierbei sowohl Reaktionsschemata als auch Repräsentationen von Bauteilen. Insbesondere sind die Bauteile nicht maßstabsgetreu dargestellt. Komponenten können in ihren Größen verzerrt dargestellt sein. Längen oder Längen-Verhältnisse können den Zeichnungen nicht entnommen werden.

Figur 1 zeigt einen Kondensator.

Figur 2 zeigt schematisch verschiedene allgemeine Vernetzungsmodi in Polymeren.

Figur 3 zeigt eine allgemeine Formel für ein Acrylatmonomer.

Figur 4 zeigt eine allgemeine Repräsentation eines Copolymers enthaltend Acrylatwiederholeinheiten.

Figur 5 zeigt eine radikalische Polymerisation.

Figur 6 zeigt eine Nebenreaktion einer radikalischen Polymerisation.

Figur 7 zeigt eine erste Vernetzungsreaktion.

Figur 8 zeigt eine zweite Vernetzungsreaktion.

Figur 9 zeigt schematisch eine dritte Vernetzungsreaktion.

Figur 10 zeigt schematisch eine vierte Vernetzungsreaktion.

Figur 11 zeigt schematisch eine fünfte Vernetzungsreaktion.

Figur 12 zeigt schematisch eine sechste Vernetzungsreaktion.

Figur 13 zeigt schematisch eine siebte Vernetzungsreaktion.

Figur 14 zeigt ein Prozessschema zur Herstellung eines Kondensators.

Figur 15 zeigt eine erste thermogravimetrische Analyse.

Figur 16 zeigt eine zweite thermogravimetrische Analyse.

Figur 17 zeigt eine Darstellung der Abhängigkeit des Verlustfaktors vom Vernetzungsgrad.

Figur 18 zeigt eine Abhängigkeit der Permittivität vom Vernetzungsgrad.

Figur 19 zeigt eine Durchbruchsspannungsverteilung für ein erfindungsgemäßes System

Figur 20 zeigt ein erstes Ausführungsbeispiel eines Vielschichtkondensators.

Figur 21 zeigt ein zweites Ausführungsbeispiel eines Vielschichtkondensators.

Figur 22 zeigt ein drittes Ausführungsbeispiel eines Vielschichtkondensators.

Figur 23 zeigt ein viertes Ausführungsbeispiel eines Vielschichtkondensators.

Figur 24 zeigt eine schematische Darstellung eines Wickelkondensators im Querschnitt.

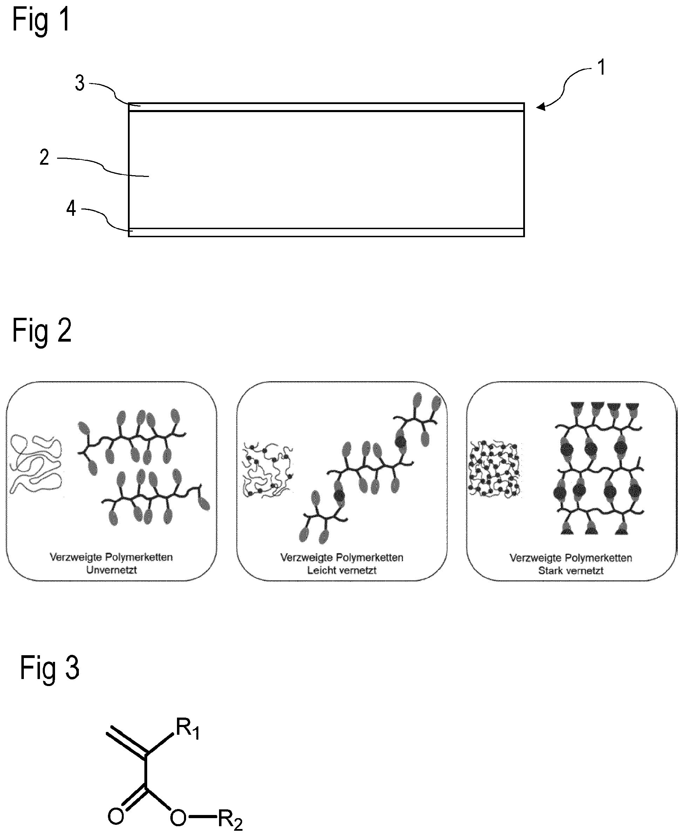

Figur 1 zeigt eine schematische Darstellung eines einfachen Kondensators **1.** Es kann sich hierbei **z.B.** um einen Plattenkondensator handeln. Der Kondensator 1 weist eine erste Elektrode 3 und eine zweite Elektrode 4 auf. Zwischen der ersten Elektrode 3 und der zweiten Elektrode 4 ist eine Dielektrikumsschicht 2 angeordnet. Die Dielektrikumsschicht 2 weist ein gemäß dem erfindungsgemäßen Prozess hergestelltes Dielektrikum bzw. Polymer-Dielektrikum aus einem Polymermaterial auf. Das Polymermaterial kann zum Beispiel in einer Schicht im Dielektrikum 2 enthalten sein beziehungsweise die Schicht kann aus diesem bestehen (beides nicht dargestellt). Weiterhin kann das Material der Dielektrikumsschicht 2 ein Mischmaterial aus dem erfindungsgemäßen Polymermaterial und anderen Polymeren aufweisen. Bevorzugt besteht die Dielektrikumsschicht 2 ausschließlich aus dem erfindungsgemäßen quervernetzten Polymermaterial. Hierbei bedeutet "besteht" dass ausschließlich ein erfindungsgemäßes Material enthalten ist, wobei zusätzlich noch technisch nicht vermeidbare Verunreinigungen wie Lösungsmittelrückstände oder Radikalstarter im Material enthalten sein können. Deren Anteil ist bevorzugt kleiner 1 %.

In Figur 2 sind drei mögliche Zustände von Polymeren schematisch skizziert dargestellt. Im Bild links ist eine verzweigte Polymerkette dargestellt, welche unvernetzt vorliegt.

Verzweigt heißt hierbei, dass die hier als graue Ellipsen dargestellten funktionellen Gruppen von einer Polymerkette beziehungsweise einer Polymerhauptkette abzweigen. Die Polymerhauptkette weist hierbei keine Vernetzungen beziehungsweise Quervernetzungen zu anderen Polymerketten oder in sich auf.

Im mittleren Bild ist eine Polymerkette ähnlich dem linken Bild dargestellt, wobei hier zusätzlich einzelne Verknüpfungen über reaktive Gruppen gebildet worden sind, wie durch die verbindenden Punkte dargestellt. Im Sinne der gegenwärtigen Erfindung stehen hier die verknüpfenden Punkte die die Ellipsen verbinden für die Verknüpfermoleküle.

Im Bild rechts ist ein starker Vernetzungsgrad dargestellt, gemäß welchem über jede der abzweigenden funktionellen beziehungsweise reaktiven Gruppen eine Verknüpfung erfolgt.

In Figur 3 ist eine Acrylatgrundstruktur dargestellt, welche ein bevorzugtes Monomer für den erfindungsgemäßen Prozess darstellt. Die Struktur gemäß der Figur 3 weist zwei Arten von Resten $R_1$ und $R_2$ auf. Weiterhin weist die Struktur eine Kohlenstoffkohlenstoffdoppelbindung auf. Über die Kohlenstoffkohlenstoffdoppelbindung kann eine Polymerisationsreaktion durch Radikalkettenreaktion wie unten dargestellt erfolgen.

Der Rest $R_1$ kann jeder beliebige Rest sein. Insbesondere kann er bevorzugt Wasserstoff oder eine Methylgruppe sein. Alternativ kann eine der folgenden Gruppen im Rest $R_1$ enthalten sein oder $R_1$ kann aus einer der folgenden Gruppen bestehen: Alkyl-Gruppen, Alkaryl-Gruppen, Heteroalkyl-Gruppen, Heteroaryl-Gruppen, Alkenyl-Gruppen, Halog(id)en, Amino-Gruppen, Amid-Gruppen, Carbonsäure-Gruppen, EsterGruppen, Hydroxy-Gruppen, Ether-Gruppen, Imid-Gruppen, ThiolGruppen und Thioether-Gruppen.

Der Rest $R_2$ kann auch grundsätzlich eine Vielzahl von Gruppen tragen. Bevorzugt ist, dass am Rest $R_2$ über die Esterbindung eine reaktive Gruppe angeordnet ist.

Wie unten dargestellt ist besonders bevorzugt, wenn eine Glycidylgruppe den Rest $R_2$ darstellt. Eine Glycidylgruppe weist eine endständige Epoxygruppe auf. Grundsätzlich kann als Rest $R_2$ aber auch verallgemeinert bevorzugt jede Art von Gruppe, welche ein Epoxid aufweist eingesetzt werden. Besonders bevorzugt sind hierbei endständige Epoxygruppen.

Über Epoxygruppen, aber auch über andere geeignete Gruppen, kann eine Verknüpfung über eine Reaktion vom Grafting-From-Typ stattfinden. Insbesondere kann hierbei eine polymerisationsartige Reaktion verwendet werden, die an einer reaktiven Gruppe einer Polymerkette startet und dann eine oligomerartige oder polymerartige Seitenkette bildet, die wiederum an einer anderen Polymerkette oder an einem anderen Punkt der ersten Polymerkette angreift und somit endet. Dies wird über kleine Moleküle, welche als Grafting-From-Monomere bezeichnet werden können, erreicht. Diese bilden hierbei Grafting-From-Wiederholeinheiten zwischen zwei reaktiven Gruppen. Insbesondere können Grafting-From-Monomere ausgewählt sein aus Ethylenoxid, Propylenoxid oder 1,2-Epoxybutan.

Alternativ kann der Rest $R_2$ ein Halogenid aufweisen.

Weiterhin kann das gesamte Sauerstoff-$R_2$-Motiv (O-$R_2$) durch ein Halogenid ersetzt sein, wodurch ein Carbonsäurehalogenid die reaktive Gruppe bildet.

Als weitere Alternative kann als Rest $R_2$ oder über den Rest $R_2$ eine Thiolgruppe an der Polymerkette angeordnet sein. Als weitere Alternative kann eine Kohlenstoffkohlenstoffdoppelbindung als reaktive Gruppe über die funktionelle Gruppe $R_2$ angeordnet sein. Beispielshalber kann die Kohlenstoffkohlenstoffdoppelbindung eine terminale Doppelbindung sein.

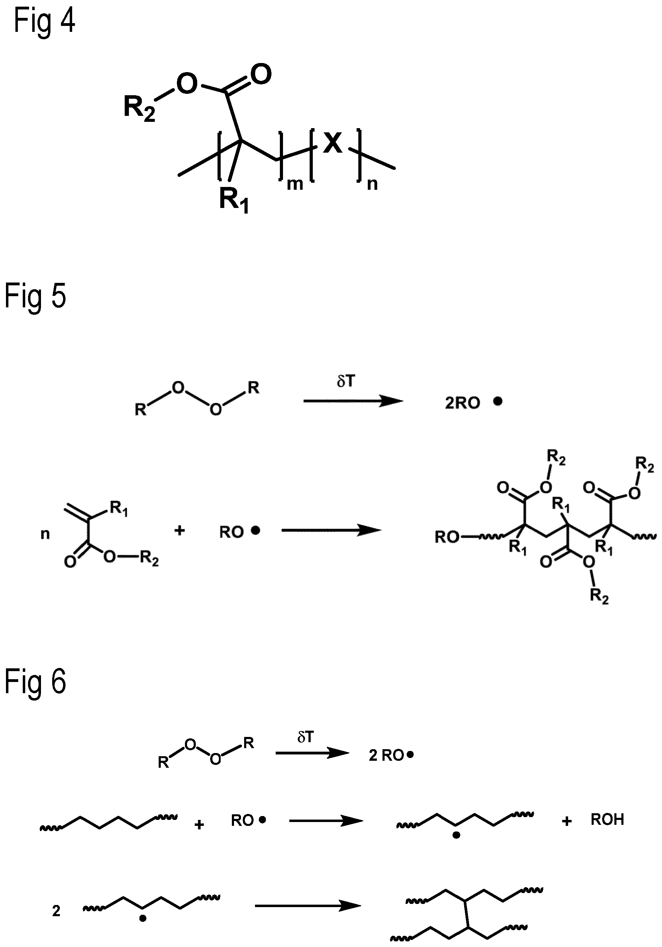

In Figur 4 ist eine Copolymerkette dargestellt. Die Copolymerkette weist als eine erste Wiederholeinheit eine Acrylatwiederholeinheit auf, welche bevorzugt aus einem Acrylatmonomer, wie es in Figur 3 dargestellt ist, gebildet wurde. Als zweite Wiederholeinheit des Copolymers ist X in dem Copolymer enthalten. Die Acrylatwiederholeinheit oder X können grundsätzlich in jeder Form von Copolymeren, wie zum Beispiel auch in Blockcopolymeren, miteinander verbunden sein. Für einen praktischen Prozess kann es bevorzugt sein, dass die Wiederholeinheiten des Copolymers statistisch über die Kette verteilt sind. Alternativ können Copolymere eine periodische Anordnung von Wiederholeinheiten aufweisen. Dies kann zum Beispiel dadurch gebildet werden, dass Dimere, oder sonstige vorgefertigte Einheiten aus Monomeren polymerisiert werden. Diese Konzepte können über das Beispiel des acrylathaltigen Copolymers hinaus auch analog auf jede Art von Copolymer oder Terpolymer übertragen werden.

Die Acrylatwiederholeinheit in Figur 4 kann auch als Platzhalter für ein anderes Monomer gesehen werden.

X kann bevorzugt ausgewählt werden aus einem linearen verzweigten oder zyklischen Polysiloxan, einem Polyolefin oder einem Heteroatom-Polyolefin. Auch diese können gegebenenfalls mit Alkaryl-Gruppen, Alkenyl-Gruppen, HalogenGruppen, Amino-, Nitril-Gruppen, Nitro-Gruppen, Alkoholen, Carbonsäure-Gruppen, Carbonsäureester-Gruppen oder Thio-Gruppen funktionalisiert sein. Besonders bevorzugt ist auch X eine Acrlyatwiederholeinheit mit einer unpolaren Gruppe. Folglich ist das Polymer beziehungsweise die Polymerkette bevorzugt ein Copolymer aus Glycidylmethacrylat und einer Acrlyatwiederholeinheit mit einer unpolaren Gruppe.

In Figur 5 ist ein Beispiel für eine Radikalkettenreaktion dargestellt. Im Beispiel der Figur 5 wird eine Polymerisationsreaktion dargestellt, in welcher Acrylatmonomere gemäß Figur 3 polymerisiert werden. Das Schema gilt aber analog für jede erdenkliche radikalische Polymerisation.

Durch thermische oder photochemische Reaktionen wird ein Radikalstarter wie ein organisches Peroxid in zwei Radikale gespalten. Das organische Peroxid kann dann an eine Kohlenstoffkohlenstoffdoppelbindung eines Monomers angreifen, wie zum Beispiel an ein Acrylatmonomer. Dadurch wird wiederum ein Radikal gebildet und die Kettenreaktion kann sich fortsetzen. Durch eine Terminierungsreaktion wird die Kettenreaktion beendet. Radikalische Polymerisation kann zu normalverteilten Polymerkettenlängen führen, für die eine mittlere Kettenlänge oder eine Molekülmasse angegeben werden kann. Weiterhin führt sie für die Bildung von Copolymeren zu statistisch verteilten Wiederholeinheiten innerhalb einer Polymerkette.

Block-Copolymere oder Block-Terpolymere weisen keine statistische Verteilung der Wiederholeinheiten auf.

Für ein erfindungsgemäßes acrylathaltiges Copolymer kann beispielsweise eine mittlere Masse von 32 kDa (ausgeschrieben: 32 Kilodalton) erreicht werden.

Es ist hierbei bevorzugt, dass die Polymerketten nur kurze Verzweigungen bestehend aus von der Hauptkette abzweigenden funktionellen Gruppen aufweisen. Abzweigungen von Polymerketten, also Vergabelungen von Polymerhauptkette sind nicht bevorzugt.

Wie in Figur 6 dargestellt kann es unter Umständen bei der Radikalkettenreaktion dazu kommen, dass als Nebenreaktion zwei Polymerketten miteinander verknüpft beziehungsweise verbrückt werden. Es ist gemäß der gegenwärtigen Erfindung bevorzugt, dass der Anteil an entsprechenden Vernetzungsreaktionen beziehungsweise der Anteil an verbrückten Polymerhauptketten gering ist. Insbesondere ist der so erreichte Vernetzungsgrad bevorzugt deutlich geringer als der Vernetzungsgrad, welcher über die weiter unten beschriebenen Vernetzungsreaktionen erreicht wird. Bevorzugt ist ein Vernetzungsgrad kleiner 1 %, was Lösung in organischen Lösungsmitteln erlaubt.

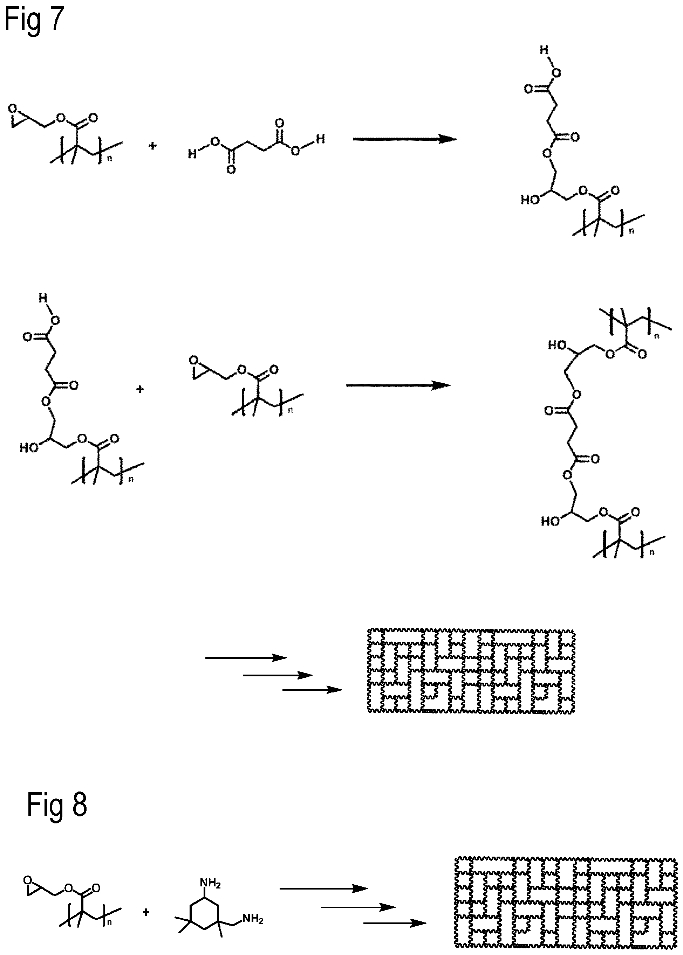

In Figur 7 ist ein erstes Beispiel für eine Vernetzungsreaktion dargestellt. Sie kann als beispielhaft angesehen werden für jegliche Verknüpfung, welche mittels eines Epoxids (endständigen Epoxids) als reaktiver Gruppe und eines carbonsäurehaltigen Verknüpfermoleküls erfolgt. Als Beispiel für das carbonsäurehaltige Verknüpfermolekül beziehungsweise insbesondere für eine bifunktionelle Carbonsäure (Dicarbonsäure) ist hier Bernsteinsäure dargestellt. Alternativ und ebenso bevorzugt können z.B. auch Oxalsäure, Valonsäure oder Adipinsäure verwendet werden. Die Carbonsäuregruppen bzw. der einfach gebundene Sauerstoff darin kann hier als Verknüpfungspunkt wirken. Es ist bei den oben dargelegten Verknüpfermolekülen bevorzugt, dass sich die Verknüpfungspunkte an voneinander maximal entfernten Punkten des Moleküls befinden.

In der Reaktion greift der einfach gebundene Sauerstoff der Säuregruppe mit einem freien Elektrodenpaar als Nukleophil an dem terminalen Kohlenstoff der Epoxygruppe an. Das Proton wird auf den bisherigen Epoxysauerstoff übertragen und es bildet sich eine Esterbindung aus. Alternativ kann die Säuregruppe zunächst deprotoniert werden und die gebildete Carboxylatgruppe kann als Nukleophil angreifen.

Es ist bevorzugt, dass innerhalb der Polymerketten die Wiederholeinheiten und die aus den Verknüpfermolekülen und den reaktiven Gruppen gebildeten Strukturen identifizierbar sind. Nach Abschluss der Vernetzungsreaktionen, welche eine Polymerkette über die beiden reaktiven Gruppen jeweils mit einem Verknüpfermolekül verbunden hat, ist es in diesem Beispiel möglich, auch in reagierter Form die ursprünglichen Monomere des Polymers, sowie die reaktiven Gruppen und das Verknüpfermolekül zu identifizieren. Dies ist nicht zwingend, gilt aber bevorzugt verallgemeinert für jede erfindungsgemäße Reaktion.

Die zweite Teilreaktion der Vernetzung geht vom Produkt der ersten Teilreaktion aus, wobei die zweite Carbonsäure auf äquivalente Art und Weise wieder an einer Epoxygruppe angreift. Dadurch wird eine Quervernetzung zwischen zwei Polymerketten oder analog auch innerhalb zweier Abschnitte einer einzelnen Polymerkette gebildet.

In Figur 8 ist eine zweite Reaktion oder die Edukte einer zweiten Vernetzungsreaktion, welche ein Polymernetz bilden, dargestellt. Repräsentativ für alle epoxyfunktionalisierten Acrylate ist wieder Polyglycidylmethacrylat dargestellt. Als Verknüpfermolekül ist hierbei Isophorondiamin repräsentativ für auf Aminen basierenden Verknüpfermolekülen dargestellt. Alternativ und ebenso bevorzugt dazu können zum Beispiel und auch bevorzugt p-Xylylendiamin, 1,5-Diamino-2-methylpentan, Ethylendiamin und Hexamethylendiamin als Verknüpfermolekül verwendet werden. Alternativ dazu kann eine der Amingruppen auch durch eine Alkoholgruppe ersetzt sein. Ein Beispiel dafür kann Ethanolamin, Diethanolamin, N-Benzylethanolamin, 2-Amino-2-methylpropionsäure und 2-Amionocyclopentanol sein.

Gemäß dem Reaktionsmechanismus der in Figur 8 gezeigten Reaktion kann das primäre Amin als Verknüpfungspunkt wirken und greift als Nukleophil am terminalen Kohlenstoff einer Epoxygruppe an. Dadurch werden Quervernetzungen hergestellt. Im gegenwärtigen Beispiel kann mit dem primären Amin als Verknüpfungspunkt mehr als eine reaktive Gruppe reagieren. Im gegenwärtigen Beispiel können je zwei benachbarte Epoxygruppen an einer Polymerkette mit einer Aminogruppe unter Bildung eines tertiären Amins reagieren. Dies bedingt, dass die reaktiven Gruppen ausreichend dicht an der Polymerkette gedrängt vorliegen. So kann in einem Copolymer mit Wiederholeinheiten ohne reaktive Gruppe diese Reaktion unterdrückt werden, wenn die Wiederholeinheiten mit reaktiver Gruppe ausreichend vereinzelt werden. In so einem Fall kann die Reaktion auch nur zur Bildung eines sekundären Amins führen.

Eine primäre Aminogruppe gemäß des gegenwärtigen Beispiels ist somit ein Beispiel für einen Verknüpfungspunkt mit welchem mehr als eine reaktive Gruppe reagieren kann.

Alternativ kann als Verknüpfungsmolekül ein Molekül mit Alkoholgruppen oder sekundären Aminen als Verknüpfungspunkte eingesetzt werden.

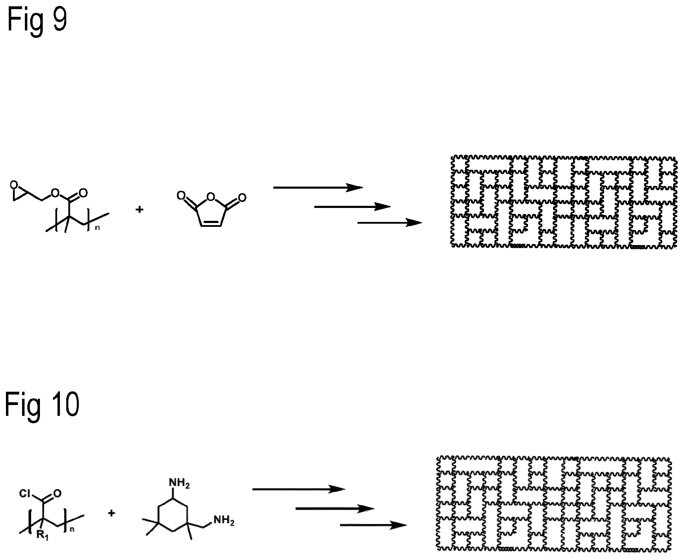

Figur 9 zeigt ein drittes Beispiel für eine Vernetzungsreaktion. Repräsentativ für alle epoxyfunktionalisierten Acrylate ist wieder Polyglycidylmethacrylat dargestellt. Hierbei ist als Verknüpfermolekül beispielshaft Maleinsäureanhydrid dargestellt. Alternative Anhydride können zum Beispiel ausgewählt werden aus Anhydriden der zu Figur 7 genannten Carbonsäuren, Phthalsäureanhydrid und methyliertem Phthalsäureanhydrid.

In Figur 10 ist eine vierte Vernetzungsreaktion beispielhaft aufgeführt. Gezeigt als Edukte sind ein Polyacrylat-Derivat mit einem Carbonsäurechlorid und Isophorondiamin als Verknüpfermolekül. Die Säurechloridgruppe ist hierbei die reaktive Gruppe, die mit den primären Amingruppen des Isophorondiamins zu Amiden reagiert. Alternativ können auch andere geeignete Abgangsgruppen, wie z.B. andere halogenfunktionalisierte funktionelle Gruppen dienen.

Isophorondiamin steht repräsentativ für bifunktionelle Amine als Verknüpfermoleküle. Alternativ und auch

bevorzugt können auch Ethylendiamin oder Hexamethylendiamin, aber auch Triamine verwendet werden. Alternativ dazu kann auch eine der Aminogruppen durch eine Alkoholgrupp ersetzt werden. Beispiele für solche Moleküle sind Ethanolamin, Diethanolamin oder 2-Aminocyclopentanol.

Die beiden Aminogruppen des Isophorondiamins stellen die (bisfunktionellen) Verknüpfungspunkte dar, welche an Säurechloridgruppen angreifen.

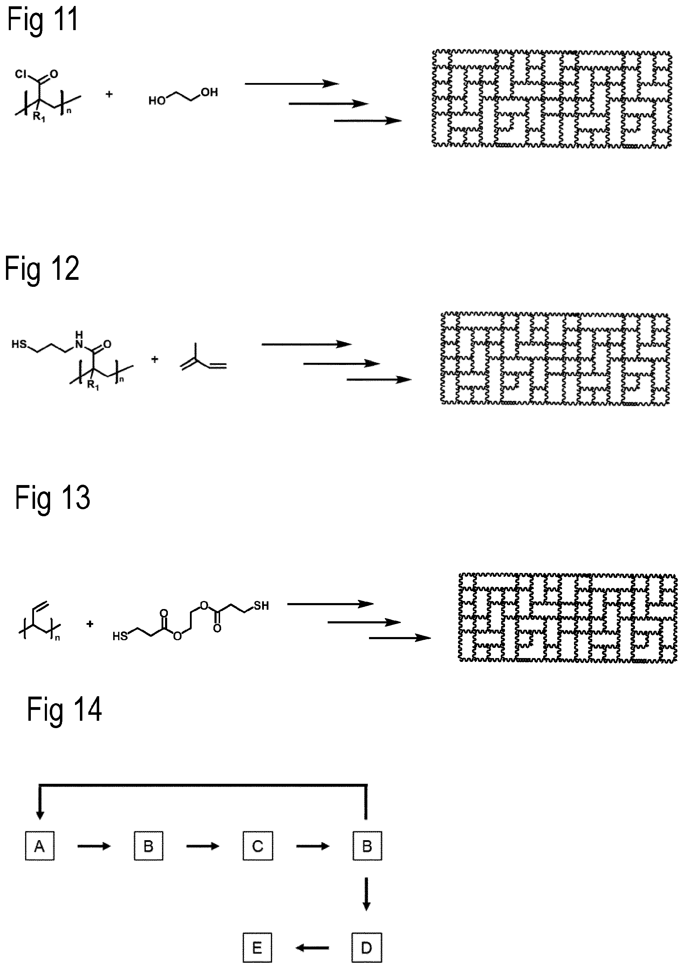

In Figur 11 ist eine fünfte Vernetzungsreaktion gezeigt. Gezeigt als Edukte sind ein Polyacrylat-Derivat mit einem Carbonsäurechlorid und Ethylenglycol als Verknüpfermolekül. Alternativ zur gezeigten reaktiven Gruppe können auch die zu Figur 10 genannten Alternativen eingesetzt werden. Alternativ können als Verknüpfermolekül zum Beispiel 1,4-Butandiol, Propylen-1,3-diol, Pentaerythtriol oder Xylitol eingesetzt werden. Die Alkoholgruppe wirkt hierbei als Verknüpfungspunkt. Die Säurechloridgruppe ist hierbei die reaktive Gruppe, die mit den Alkoholgruppen zu Estern reagiert.

In Figur 12 ist ein sechstes Beispiel einer Vernetzungsreaktion gezeigt. Das Polymer weist als Anknüpfungspunkt für die Seitengruppe mit der reaktiven Gruppe eine Amidbindung auf. Die reaktive Gruppe ist hierbei eine terminale Thiolgruppe.

Als Verknüpfermolekül wird ein Dien eingesetzt, welches zwei Kohlenstoffkohlenstoffdoppelbindungen (Alkenylgruppen) aufweist. Die Alkenylgruppe wirkt hierbei als Verknüpfungspunkt. Durch eine Anti-Markownikow-Addition beziehungsweise im speziellen Fall durch eine Thiol-en Klickreaktion, welche radikalisch stattfindet und entweder thermisch oder photochemisch initiiert werden kann, kann die Thiolgruppe an eine Doppelbindung des Alkens bzw. des Dialkens angreifen, wodurch ein Thioether gebildet wird.

Als thermische Initiatoren können hierzu z.B. N,N-Azobisisobutyronitril, Dibenzoylperoxid, Dicumylperoxid oder Kaliumpersulfat eingesetzt werden. Als photochemische Initiatoren können zum Beispiel Benzoin oder Ethyl(2,4,6-trimethylbenzoyl)phenylphosphinat eingesetzt werden.

Als Beispiel für ungesättigte Alkene als Verknüpfermoleküle können 1,3-Pentadien, 1,4-Pentadien, Isopren, 2,4-Hexadien, Hexa-1,3,5-triene und 1,3-Butadien verwendet werden.

In Figur 13 ist ein siebtes Beispiel für eine Vernetzungsreaktion dargestellt. Hierbei weist das Polymer als reaktive Gruppe eine Doppelbindung auf. Diese ist hier beispielhaft nicht über ein Heteroatom an der Kette befestigt, sondern über eine Kohlenstoffkohlenstoffbindung. Als Verknüpfermolekül für eine Thiol-en Klick-Reaktion als Beispiel für eine Anti-Markownikow-Addition wird hierbei Ethylenglycolbis(3-mercaptopropionat) gezeigt. Alternativ kann auch Glycoldi(3-mercaptopropionat), Glycoldimercaptoacetat, Trimethylolpropantri(3-mercaptopropionat) oder Pentaerythritoltetra(3-mercaptopropionat) verwendet werden.

In Figur 14 ist eine schematische Darstellung eines Prozesses zur Kondensatorherstellung gezeigt.

Zunächst wird gemäß Schritt A eine Elektrode geformt. Als Elektrode kann grundsätzlich ein beliebiges geeignetes Metallblech oder ein Metallfilm verwendet werden. Bevorzugt wird die Elektrode jedoch auf einem Substrat aufgebracht. Als Substrat können Kunststofffolien, wie zum Beispiel Polyimidfolien oder Glas oder Halbleiterwafer eingesetzt werden. Auf diesen kann durch eine geeignete Methode eine metallische Schicht aufgebracht werden. Bevorzugt werden hierbei physikalische Gasabscheidungsverfahren (physical vapour deposition, PVD) eingesetzt. Beispiele für PVD sind Sputtern oder thermisches Verdampfen. Die Elektrode kann hierbei aus einem einzelnen Material wie zum Beispiel Aluminium oder Silber bestehen. Alternativ können mehrschichtige Elektroden, wie z.B. Chrom/Aluminium, Chrom/Silber oder Chrom/Nickel/Aluminium bzw. Chrom/Nickel/Silber verwendet werden. Die Schichtdicke der Elektroden bewegt sich in der Größenordnung von mehreren 10 nm und hat eine auf die jeweilige Ausgestaltung angepasste Dicke.

Gemäß Schritt B wird anschließend das Dielektrikum aufgebracht. Grundsätzlich kann für die Dielektrikumsherstellung reaktive Extrusion oder Abscheidung aus Lösung eingesetzt werden. Für das gegenwärtig beschriebene Verfahren ist Abscheidung aus Lösung bevorzugt. Insbesondre kann über Slot Diecoating, Spray Coating oder Schablonendruck die Polymerlösung aufgebracht werden. Die Polymerlösung weist die Polymerketten in unvernetztem oder sehr gering vernetztem Zustand auf. Die Polymerketten wurden vor dem Abscheiden durch die Polymerisation von Monomeren hergestellt. Die Polymerketten können Homo- oder Copolymere sein, welche jeweils Wiederholeinheiten mit reaktiven Gruppen enthalten. Diese können durch Funktionalisierung vor der Polymerisation an den Monomeren angebracht werden oder nach der Polymerisation an den Wiederholeinheiten. Weiterhin weist die Polymerlösung Lösungsmittel auf, die die Polymere in Lösung halten. Für ein erfindungsgemäßes Poly(glycidylmethacrylat) oder entsprechende Copolymere können als Lösungsmittel bevorzugt Ethylacetat, Ethyllactat oder Chloroform eingesetzt werden. Die Polymerlösung kann eine Polymerkonzentration von 20 bis 500 mg/ml aufweisen. Es können weitere Zusätze enthalten sein. Zudem ist der Polymerlösung ein definierter Anteil an Verknüpfermolekül zugesetzt. Die Menge an Verknüpfermolekül bemisst sich nach dem Anteil an reaktiven Gruppen und dem zu erzielenden Vernetzungsgrad. Die Verknüpfermoleküle weisen mindestens zwei Verknüpfungspunkte auf, welche dazu geeignet sind mit reaktiven Gruppen zu reagieren. Weiterhin wird im Schritt B die Vernetzung der Polymerketten durchgeführt. Je nach System kann diese auf verschiedene Art und Weise erfolgen. Bevorzugt ist eine thermische Verknüpfung durch Tempern bei 30 bis 150 °C.

Eine zweite Elektrode kann nun in Schritt C mittels eines PVD-Prozesses aufgebracht werden. Die zweite Elektrode kann grundsätzlich aus den gleichen Materialien hergestellt oder abgeschieden werden wie die erste Elektrode.

Zur Herstellung eines Kondensators gemäß Abbildung 1 werden nur die Schritte A, B und C durchgeführt. Ein mögliches Substrat kann nach dem Schritt C in einem solchen Fall entfernt werden. Entsprechend können die Schritte A, B und C für einen Wickelkondensator durchgeführt werden.

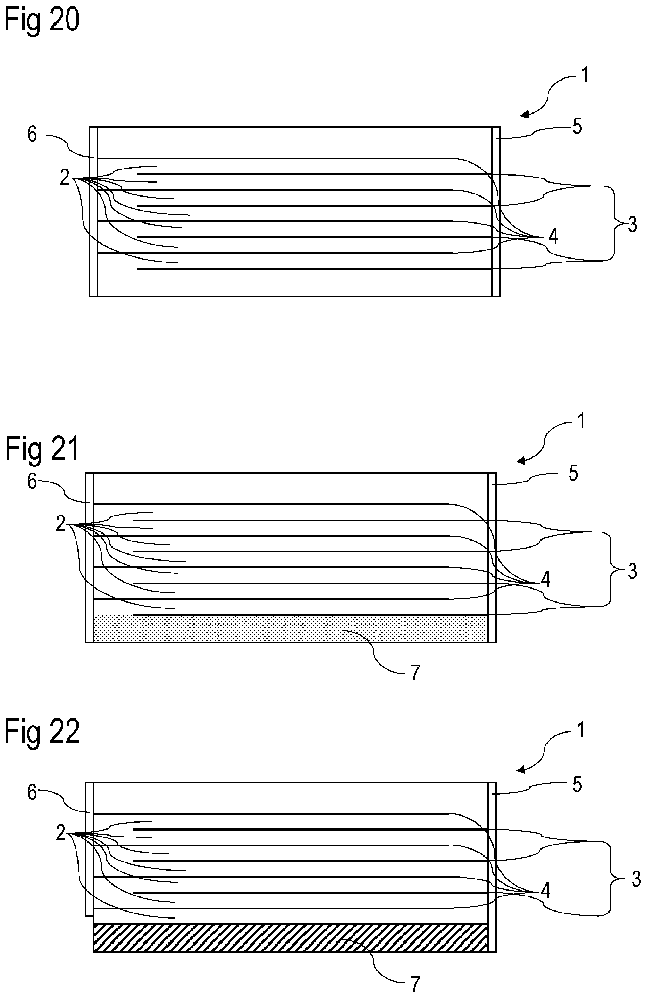

Für den Fall eines Vielschichtkondensators wie er in den Figuren 21 bis 24 gezeigt ist und unten beschrieben wird, werden die Schritte A, B, C und ein anschließender wiederholter Schritt B beliebig oft wiederholt, um die Schichten zu bilden. Insbesondere kann bei einem Vielschichtkondensator anschließend in einem optionalen Schritt D ein Schutzlack oder eine sonstige Schutzvorrichtung oder Barriereschicht aufgebracht werden. Diese besteht bevorzugt aus einem temperaturstabilen inerten hydrophoben Kohlenwasserstoff wie Parylen oder fluorbasierten Kohlenwasserstoffen (EFTE, PTFE, oder Ähnliches). Diese kann mittels Aufdampfprozessen oder lösungsmittelbasierten Beschichtungsverfahren, wie zum Beispiel Spray Coating oder Siebdruck aufgebracht werden. Die Barriereschicht wird nicht auf den Seiten aufgebracht, an welchen die Innenelektroden beziehungsweise die Elektroden des Vielschichtbauteils freiliegen. In einem letzten Schritt E werden Seitenkontaktierung beziehungsweise Außenelektroden auf den Seiten, auf welchen die jeweiligen (Innen)Elektroden frei liegen, aufgebracht. Diese kann aus Messing, Kupfer und Zinn oder Aluminium oder Silber bestehen. Andere taugliche stromleitende Materialien, bevorzugt metallische Materialien, können hierfür auch verwendet werden.

Für einen Vielschichtkondensator können Elektroden, welche als Innenelektroden wirken strukturiert werden.

Alternativ kann die Dielektrikumsschicht auch dadurch hergestellt werden, dass sie nicht direkt auf den Elektroden aufgebracht wird, sondern indem die Schicht durch Abscheiden aus Lösung auf einem Substrat, welches mit einem geeigneten Trennmittel versehen ist, aufgebracht wird. Nach einem Schritt des Vernetzens, welcher wie oben beschrieben durchgeführt werden kann, kann eine Folie hergestellt werden, welche dann zu einem Vielschicht- oder einem Wickelkondensator weiterverarbeitet werden kann.

Als eine alternative Methode eine Folie herzustellen kann auch Folienziehen bzw. reaktive Extrusion verwendet werden. Insbesondere können mit einem Doppelschneckenextruder die reaktiven Komponenten, also die Polymerketten mit den reaktiven Gruppen und die Verknüpfermoleküle, miteinander vermischt werden und diese können dabei gleichzeitig miteinander reagieren. Aus dem quervernetzten reagierten Material kann anschließend eine Folie gezogen werden. Diese Methode ist für die Herstellung eines Wickelkondensators, sowie für die Herstellung eines durch Wickeln hergestellten "gestackten" Kondensators bevorzugt. Die so hergestellte Folie bzw. Schicht kann dann beidseitig zur Herstellung von Elektroden metallisiert werden.

Die mit dem erfindungsgemäßen Prozess hergestellten Kondensatoren weisen Einsatztemperaturen von über 150 °C auf.

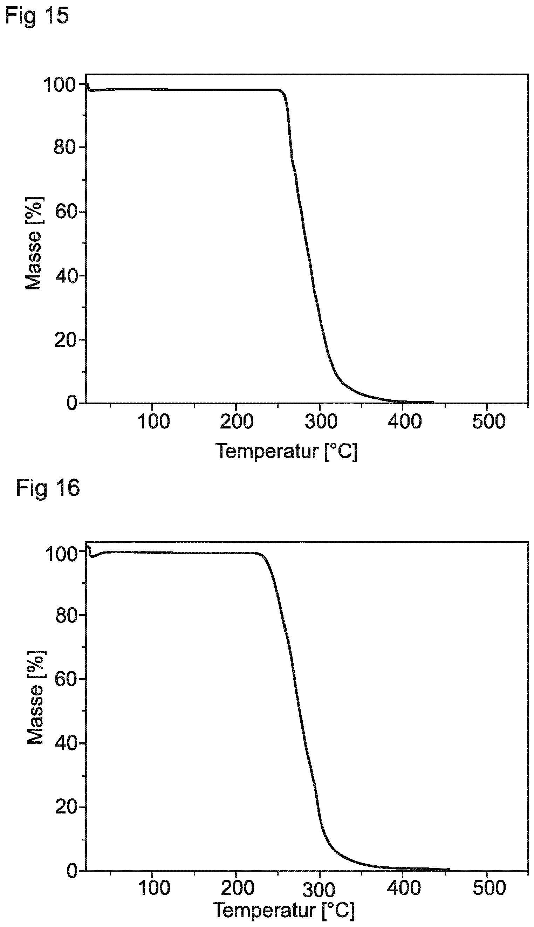

In Figur 15 ist eine thermogravimetrische Analyse eines reinen Poly(glycidylmethacrylat)s gezeigt. Dieses weist einen relativen und absoluten Vernetzungsgrad von über 25 % auf, wobei hier jede Wiederholeinheit genau eine reaktive Gruppe trägt. Die thermogravimetrische Analyse wurde an Luft durchgeführt, wobei eine Temperatursteigerungsrate von 10 Kelvin pro Minute verwendet wurde. Wie die thermogravimetrische Analyse zeigt, findet unterhalb von 240 °C kaum ein Masseverlust statt. Erst ab 240 °C ist ein Masseverlust von über 5% zu beobachten. Ein tatsächlich steiler Abfall der Masse kann auch erst oberhalb von 250 °C beobachtet werden. Entsprechend ist das entsprechende erfindungsgemäße Material zum Einsatz für Temperaturen von 150 °C oder darüber geeignet. Es eignet sich auch dazu in einem Bauteil eingesetzt zu werden, welches durch Löten angeschlossen wird. Das Material kann den üblichen Bedingungen des Lötens leicht widerstehen.

In Figur 16 ist eine thermogravimetrische Analyse eines Copolymers mit Glycidylmethacrylat- und Butylmethacrylatwiederholeinheiten gezeigt, wobei der Anteil an Glycidylmethacrylat 20% und der Anteil an Butylmethacrylat 80% **war.** Der relative Vernetzungsgrad, also der Anteil an vernetzenden Gylcidyl-Gruppen betrug auch hier **25%.** Die sonstigen Bedingungen entsprachen denen der thermogravimetrischen Analyse aus Figur 15.

Für das Copolymer zeigt sich eine leicht verringerte Temperaturstabilität gegenüber dem Homopolymer von Figur **15,** wobei jedoch eine Eignung für den Einsatz bei Temperaturen von über 150 °C gegeben **ist.** Die leicht verringerte Temperaturstabilität wird darauf zurückgeführt, dass durch den Anteil an Butylmethacrylatwiederholeinheiten der absolute bzw. der massenbezogene Vernetzungsgrad geringer war als für das Homopolymer von Figur 15.

Das Copolymer hat jedoch den Vorteil, dass es eine höhere Feuchtigkeitsresistenz aufweist, da der Glycidylmethacrylatanteil verringert ist. Die Butylgruppe der Butylmethacrylatwiederholeinheiten ist hydrophob und kann somit den hydroskopischen beziehungsweise wasserreaktiven Charakter der verbleibenden Glycidylgruppen kompensieren.

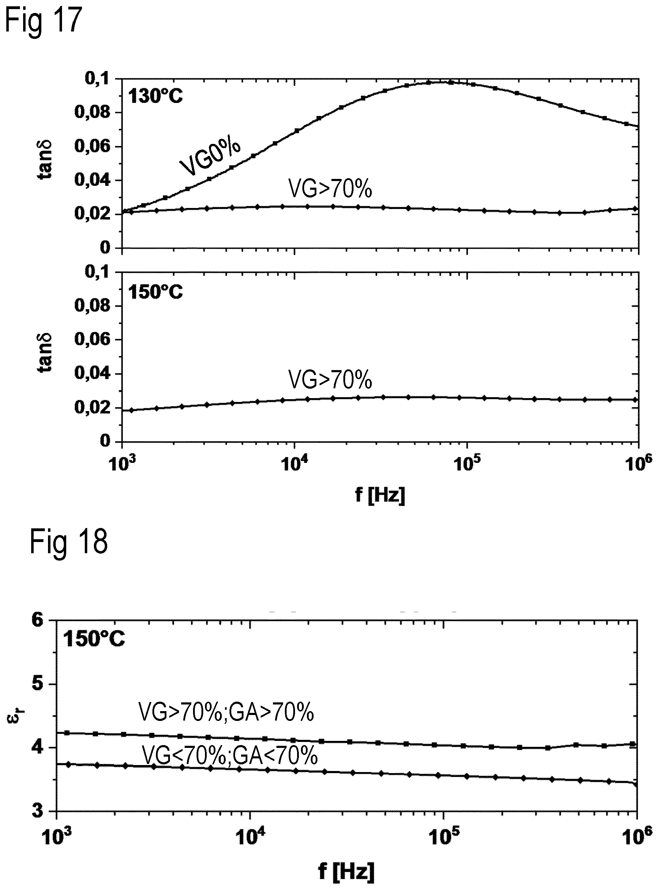

In Figur 17 sind zwei Graphen zum Temperaturverhalten des Verlustfaktors tan $\delta$ dargestellt.

Für die obere Darstellung in Figur 17, bzw. den oberen Graphen wurde der frequenzabhängige Verlustfaktor tan $\delta$ in Abhängigkeit der Frequenz bei einer Temperatur von 130°C gemessen. Für die Darstellung bei 130 °C wird eine Kurve für ein unvernetztes Polymer (VG0%) im Vergleich zu einer Kurve für ein Polymer (VG>70%), welches einen relativen Vernetzungsgrad von über 70 % aufweist, dargestellt. Das unvernetzte Polymer (VG0%) entspricht einem Polymer, wie es auch für die Erfindung verwendet wird, mit der Ausnahme, dass keine Vernetzung durchgeführt wurde.

Wie zu sehen ist, weißt der Verlustfaktor des unvernetzten Polymers (VG0%) bei 130 °C eine starke Frequenzabhängigkeit auf. Hingegen ist der Verlustfaktor des Polymers (VG>70%) mit einem relativen Vernetzungsgrad von über

70 % bei 130 °C nahezu konstant auf einem Wert von 0,02 über den Frequenzbereich von $10^3$ bis $10^6$ Hz.

Ein ähnliches Verhalten zeigt sich für das Polymer (VG>70%) mit einem relativen Vernetzungsgrad von über 70 % auch bei 150 °C. Für Temperaturen von 180 °C (nicht dargestellt) wird für das Polymer (VG>70%) mit einem relativen Vernetzungsgrad von über 70 % auch ein ähnlicher nahezu konstanter Graphenverlauf erhalten, wobei der Verlustfaktor hier höher bei ca. 0,04 liegt.

Figur 17 zeigt, dass der Vernetzungsgrad wesentlich zur Temperaturstabilität und zur Senkung des Verlustfaktors beitragen kann.

In Figur 18 ist für eine Temperatur von 150 °C die Frequenzabhängigkeit der Permittivität für zwei Dielektrikumsschichten gezeigt. Die obere Kurve zeigt das Verhalten eines Polymers (VG>70%;GA>70%) mit einem relativen Vernetzungsgrad von über 70 % und einem Glycidylmethacrylatanteil von über 70 %. Der relative Vernetzungsgrad dieses Polymers (VG>70%;GA>70%) betrug 95%. Der Glycidylmethacrylatanteil betrug 100%. Die untere Kurve zeigt das Verhalten eines Polymers (VG<70%;GA<70%) mit einem relativen Vernetzungsgrad von unter 70 % und einem Glycidylmethacrylatanteil von unter 70 %. Der relative Vernetzungsgrad dieses Polymers (VG<70%;GA<70%) betrug 45%. Der Glycidylmethacrylatanteil betrug 50%. Es handelt sich in beiden Fällen um grundsätzlich erfindungsgemäße Polymere. Wie zu sehen ist, liegt die Permittivität in beiden Fällen deutlich über 3 und ist weitgehend konstant über den gesamten Frequenzbereich zwischen $10^3$ und $10^6$ Hz. Es kann jedoch beobachtet werden, dass hier der höhere relative Vernetzungsgrad und der höhere Glycidylmethacrylatanteil zu einer erhöhten Permittivität $\varepsilon_r$ führen.

Somit konnte gezeigt werden, dass mit einem erfindungsgemäßen Polymer eine konstante Permittivität von deutlich über 3 oder sogar über 4 über einen breiten Frequenzbereich erreicht werden kann.

Dieser Trend kann auch gemäß der Ausführungsbeispiele aus Tabelle 1 erkannt werden.

Tabelle 1 zeigt die Werte des Verlustfaktors tan $\delta$ und der Permittivität $\varepsilon r$ für Polymere mit verschiedenen Zusammensetzungen und relativen Vernetzungsgraden für verschiedene Frequenzen und bei verschiedenen Temperaturen. "rel. Vernetzung" bezeichnet hierbei den relativen Vernetzungsgrad. "Glycidyl" bezeichnet hierbei den Glycidylmethacrylatanteil. "unpolare Gruppen" bezeichnet hierbei den Anteil an Wiederholeinheiten, eine unpolare Gruppe aufweisen.

Insbesondere sind in Tabelle 1 drei verschiedene Zusammensetzungen eines Copolymers aufweisend ein Polyacrylat mit Glycidylgruppen und unpolaren Gruppen in verschiedenen Zusammensetzungen gezeigt. Es ist hierbei erkennbar, dass alle diese Moleküle über einen breiten Frequenzbereich sowohl einen vorteilhaften Verlustfaktor als auch eine vorteilhaft Permittivität aufweisen. Es fällt jedoch auf, dass die Permittivität für besonders hoch vernetzte Systeme am größten ist, wohingegen der Verlustfaktor oder die Konstanz des Verlustfaktors für niedervernetztere Systeme verbessert sein kann.

Tabelle 1:

| Frequenz / Temp. | 1 kHz | | 10 kHz | | 100 kHz | | 1 MHz | | Polymer (rel. Vernetzungsgrad / Anteil Wiederholeinheiten mit bestimmten funktionellen Gruppen) |
|---|---|---|---|---|---|---|---|---|---|
| | tanδ | $\varepsilon_r$ | tanδ | $\varepsilon_r$ | tanδ | $\varepsilon_r$ | tanδ | $\varepsilon_r$ | |
| 30°C | 0,016 | 5,0 | 0,018 | 5,0 | 0,028 | 4,7 | 0,030 | 4,5 | rel. Vernetzung > 90%, Glycidyl > 70%, unpolare Gruppen < 10% |
| 150°C | 0,018 | 4,2 | 0,025 | 4,1 | 0,026 | 4,0 | 0,025 | 4,0 | |
| 30°C | 0,011 | 3,8 | 0,013 | 3,7 | 0,019 | 3,7 | 0,025 | 3,5 | rel. Vernetzung < 70%, Glycidyl < 70%, unpolare Gruppen < 50% |
| 150°C | 0,014 | 3,7 | 0,017 | 3,7 | 0,019 | 3,6 | 0,021 | 3,4 | |
| 30°C | 0,010 | 3,5 | 0,011 | 3,5 | 0,014 | 3,4 | 0,015 | 3,3 | rel. Vernetzung < 70%, Glycidyl < 60%, unpolare Gruppen > 40% |
| 150°C | 0,016 | 3,6 | 0,018 | 3,5 | 0,019 | 3,4 | 0,018 | 3,3 | |

Somit kann im Rahmen der gegenwärtigen Erfindung ein Material maßgeschneidert werden, welches nach den technisch relevanten Vorgaben entweder eine besonders gute Dielektrizitätskonstante von Werten bis beinahe 5 aufweist oder alternativ ein bezüglich des Verlustfaktors möglichst konstantes Material ist. Es soll hierbei bemerkt werden, dass auch für die Extremfälle die jeweils anderen Eigenschaften weiterhin befriedigend bleiben.

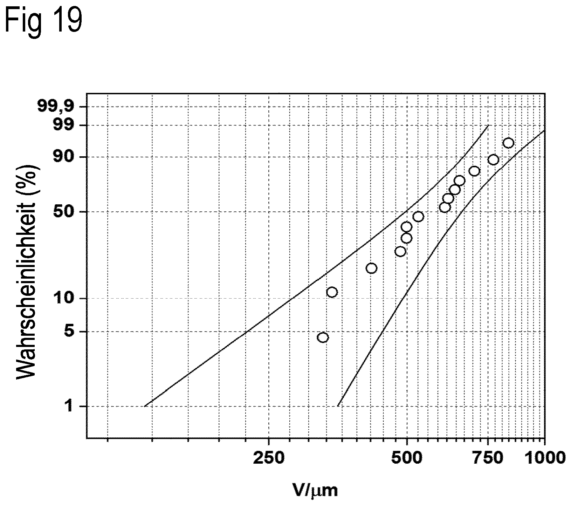

In Figur 19 ist eine statistische Auswertung der Durchbruchspannung für ein System gezeigt, welches einen Glycidylmethacrylatanteil von 50% und einen relativen Vernetzungsgrad von 95% aufweist. Die weiteren Monomere tragen unpolare Gruppen. Die Messungen wurden an einer mit einer Dielektrikumsschicht von ca. 3 μm Dicke beschichteten Metallfolie durchgeführt. Die Metallfolie diente als erste Elektrode. Eine zweite Elektrode wurde durch Aufsputtern hergestellt. Die Messung wurde mit einer Spannungsrampe von 20 kV pro Minute und einer maximalen Stromstärke von ca. 10 mA durchgeführt. Es konnte gezeigt werden, dass ein Spannungsdurchbruch erst deutlich oberhalb von 250 V erreicht werden kann. Weiterhin kann für die Mehrzahl der Tests eine Durchbruchspannungsstabilität 500 V erreicht werden.

Figur 20 zeigt ein erstes Ausführungsbeispiel eines Vielschichtkondensators 1 im schematischen Querschnitt. Der Vielschichtkondensator 1 weist eine Vielzahl von Elektroden 3 auf, welche alternierend mit Elektroden 4 gestapelt vorliegen. Beide Elektroden sind flächige Elektroden. Zwischen den ersten Elektroden 3 und den zweiten Elektroden 4, also jeweils zwischen zwei benachbarten Elektroden, ist jeweils eine Dielektrikumsschicht 2 angeordnet, welche konzeptionell der Dielektrikumsschicht 2 aus dem einfachen Kondensator Ausführungsbeispiel aus Figur 1 entspricht.

Die ersten Elektroden 3 und die zweiten Elektroden 4 haben den Charakter von Innenelektroden. An gegenüberliegenden Seitenflächen des Vielschichtkondensators sind erste Außenkontakte 5 und zweite Außenkontakte 6 angeordnet, wobei die ersten Außenkontakte die ersten Elektroden 3 leitend verbinden. Die zweiten Außenkontakte verbinden die zweiten Elektroden 4 leitend.

Der so gebildete Kondensator kann ein Surface Mounted Device (SMD) sein, welcher aufgrund seiner temperaturstabilen Dielektrikumsschicht 2 sehr gut zum Verlöten geeignet ist.

Um den Vielschichtkondensator 1 noch vorteilhafter als SMD-Bauteil einsetzen zu können, können die Außenkontakte 5 und 6 klammerförmig aufgebaut sein (nicht dargestellt). Entsprechend können die Außenkontakte 5 und 6 sich ein Stück weit auf den als Oberseite oder Unterseite in einem Aufbau verwendeten Seitenflächen entlang einer Stapelrichtung erstrecken.

Der Kondensator 1 kann zum Beispiel quaderförmig sein und aus insgesamt 1000 Wiederholeinheiten bestehen. Die Wiederholeinheiten des Vielschichtkondensators sind hierbei nicht mit den Wiederholeinheiten einer Polymerkette zu verwechseln. Die Zahl an Wiederholeinheiten kann hierbei auch höher sein. Die Wiederholeinheiten bestehen hierbei aus einer ersten Elektrode 3, einer Dielektrikumsschicht 2, einer optionalen zweiten Elektrode 4 und einer weiteren Dielektrikumsschicht 2. Der Kondensator 1 kann eine Länge von 3 bis 4 mm, eine Breite von 2 bis 3 mm und eine Höhe von 1 bis 2 mm aufweisen. Die einzelne Dielektrikumsschicht kann hierbei eine Dicke von 500 nm bis 5 μm aufweisen. Bevorzugt liegt eine Dicke zwischen 500 nm und 2 μm. Die Innenelektroden können eine Dicke von 10 bis 50 nm und bevorzugt eine Dicke von 20 nm aufweisen.

In Figur 21 ist ein zweites Ausführungsbeispiel eines Vielschichtkondensators gezeigt. Der Kondensator in Figur 21 entspricht in weiten Teilen dem Kondensator wie er in Figur 20 gezeigt ist und zuvor beschrieben wurde. In dem in Figur 21 gezeigten Beispiel ist jedoch das ursprüngliche Substrat, welches im Prozess verwendet wurde und hier als Substrat 7 gekennzeichnet ist, weiterhin am Bauteil vorhanden. Für das Ausführungsbeispiel gemäß der Figur 21 ist das Substrat 7 isolierend. Es kann zum Beispiel ein Glassubstrat, ein Halbleiterwafer oder ein flexibles Substrat wie Polyimidfolien oder ein Release Tape sein.

In Figur 22 ist ein drittes Ausführungsbeispiel eines Vielschichtkondensators 1 in schematischen Querschnitt dargestellt. Das in Figur 22 dargestellte Ausführungsbeispiel ähnelt weitestgehend dem in Figur 21 gezeigten Beispiel. Jedoch ist hierbei das Substrat 7 ein metallisches, leitendes Substrat, zum Beispiel hergestellt aus Aluminium, Kupfer oder ähnlichen Materialien. Es liegt hier beispielsweise als Folie vor. Aufgrund seines leitenden Charakters ist es nicht nötig eine leitende Schicht als erste Elektrode 3 auf dem Substrat aufzubringen. Das Substrat selbst kann als Ersatz für eine der ersten Elektroden 3 dienen. Auf dem Substrat beziehungsweise das Substrat als Ersatzelektrode kann direkt eine dielektrische Schicht aufgebracht werden. Entsprechend kann ein oben dargelegtes Verfahren angepasst werden. Es soll hierbei bemerkt werden, dass, nachdem das Substrat bevorzugt über die gesamte Breite und Länge des Kondensators geht, darauf geachtet werden muss, dass der zweite Außenkontakt 5 nicht in elektrischen Kontakt mit dem Substrat 7 tritt.

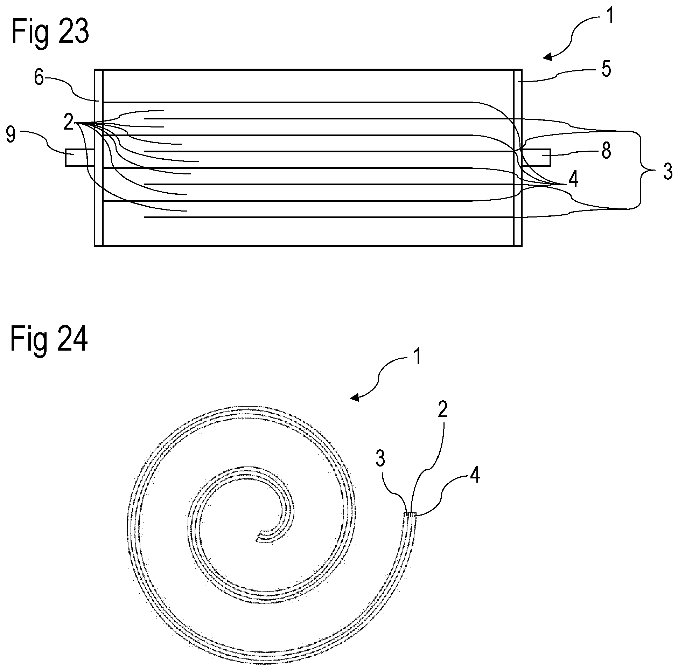

In Figur 23 ist ein fünftes Ausführungsbeispiel eines Vielschichtkondensators 1 dargestellt. Dieses entspricht dem in Figur 20 dargestellten Beispiel, weist aber zusätzlich an den Außenkontakten 5 und 6 jeweils Drähte 8 und 9 auf, wodurch Einbau in Durchsteckmontage auf einer Platine oder in einer Anwendung ermöglicht wird. Der Kondensator gemäß der Figur 23 ist somit ein Durchsteckkondensator. Die Drähte 8 und 9 erzeugen einen elektrischen und bevorzugt auch einen mechanischen Kontakt mit Anschlussstellen in einer Anwendung. Die Drähte 8 und 9 können durch beliebige Verfahren wie zum Beispiel Bonden an dem Kondensator 1 beziehungsweise an den Außenkontakten 5 und 6 befestigt werden.

In Figur 24 ist im schematischen Querschnitt ein Ausführungsbeispiel eines Wickelkondensators 1 gezeigt. In

seinem grundsätzlichen Aufbau ähnelt der Wickelkondensator dem ersten Ausführungsbeispiel, welches in Figur 1 gezeigt wurde. Eine Dielektrikumsschicht 2 wird von einer ersten Elektrode 3 und einer zweiten Elektrode 4 sandwichartig umschlossen. Die entsprechend vergleichsweise dünne und flächige sandwichartige Struktur ist zu einem Wickelkondensator aufgerollt. Bevorzugte Schichtdicken für Wickelkondensatoren mit einer erfindungsgemäßen Dielektrikumsschicht liegen im Bereich zwischen 1 μm und 10 μm. Bevorzugte Schichtdicken sind zwischen 2 μm und 5 μm.

Bezugszeichenliste

1 Kondensator
2 dielektrische Schicht
3 erste Elektrode
4 zweite Elektrode
5 erster Außenkontakt
6 zweiter Außenkontakt
7 Substrat
8 erster Draht
9 zweiter Draht

**Patentansprüche**

**1.** Verfahren zur Herstellung eines Kondensators (1), umfassend die Herstellung einer Dielektrikumsschicht (2) und das Anbringen mindestens einer Elektrode (3, 4) an einer Seite der Dielektrikumsschicht (2), wobei die Herstellung der Dielektrikumsschicht (2) die folgenden Schritte aufweist:

- Bereitstellen von Polymerketten mit reaktiven Gruppen, die von der jeweiligen Polymerkette abzweigen und dazu geeignet sind, eine kovalente Bindung mit einem Verknüpfermolekül zu bilden,
- Zugabe von Verknüpfermolekülen zu den Polymerketten, wobei jedes Verknüpfermolekül mindestens zwei chemische Verknüpfungspunkte aufweist, die jeweils dazu geeignet sind, eine kovalente Bindung mit einer reaktiven Gruppe zu bilden,
- Vernetzung der Polymerketten durch kovalente Verbindung eines Verknüpfermoleküls mit mindestens zwei reaktiven Gruppen.

**2.** Verfahren nach Anspruch 1, wobei ein Anteil von Wiederholeinheiten mit einer reaktiven Gruppe bezogen auf alle Wiederholeinheiten zwischen 20 % und 100 % beträgt.

**3.** Verfahren nach einem der Ansprüche 1 oder 2, wobei der Anteil an reaktiven Gruppen, die mit einem Verknüpfermolekül kovalent verbunden werden, 25 % bis 99 % beträgt.

**4.** Verfahren nach einem der Ansprüche 1 bis 3, wobei zumindest ein Teil von Wiederholeinheiten, die eine reaktive Gruppe tragen, Acrylatwiederholeinheiten sind, und wobei in den Acrylatwiederholeinheiten die reaktive Gruppe über die Carboxylatgruppe der Acrylatwiederholeinheit in Form einer Esterbindung angebunden ist.

**5.** Verfahren nach einem der Ansprüche 1 bis 4, wobei die reaktive Gruppe ein Epoxid enthält und die Verknüpfermoleküle funktionelle Gruppen ausgewählt aus Carbonsäuren, Aminen, Alkoholen und Anhydriden enthalten.

**6.** Verfahren nach einem der Ansprüche 1 bis 4, wobei an der Vernetzung eine $S_N1$-oder $S_N2$-Reaktion bzw. ein Additions-Eliminierungsmechanismus beteiligt ist.

**7.** Verfahren nach einem der Ansprüche 1 bis 4, wobei an der Vernetzung eine Markownikow-Addition oder eine Anti-Markownikow-Addition beteiligt ist.

**8.** Verfahren nach einem der Ansprüche 1 bis 7, welches einen Schritt der Abscheidung aus Lösung oder der reaktiven Extrusion aufweist.

**9.** Verfahren nach einem der Ansprüche 1 bis 8, wobei die Polymerkette ein Copolymer aufweisend Acrylatwiederholeinheiten und Wiederholeinheiten mit einer unpolaren Gruppe ist, und wobei die unpolare Gruppe ausgewählt ist

aus ungesättigten oder aromatischen Gruppen, und der Anteil an Acrylatwiederholeinheiten 20 bis 80 % beträgt.

**10.** Verfahren nach einem der Ansprüche 1 bis 9, wobei die Vernetzung durch Tempern bei einer Temperatur erfolgt, die dazu geeignet ist, eine Vernetzungsreaktion zu bewirken, und zwar zu einem Ausmaß von über 99 % bezogen auf die bezüglich Reaktionsäquivalente in geringerem Anteil vorhandene Komponente ausgewählt aus reaktiven Gruppen und Verknüpfermolekülen.

**11.** Wickelkondensator (1), in welchem an einer Seite der Dielektrikumsschicht (2) eine erste Elektrode (3) angeordnet ist, wobei die Dielektrikumsschicht (2) und die Elektrode (3) zu einer Kondensatorrolle aufgewickelt sind), wobei die Dielektrikumsschicht (2) ein Polymermaterial aufweist, in welchem Polymerhauptketten oder verschiedene Abschnitte einer Polymerhauptkette über verbrückende Verknüpfermoleküle kovalent miteinander verbunden sind.

**12.** Vielschichtkondensator, in welchem Elektroden (3, 4) abwechselnd mit Dielektrikumsschichten (2) gestapelt vorliegen und wobei die Elektroden (3, 4) über Außenkontakte (5, 6) kontaktiert sind, wobei die Dielektrikumsschichten (2) jeweils ein Polymermaterial aufweist, in welchem Polymerhauptketten oder verschiedene Abschnitte einer Polymerhauptkette über verbrückende Verknüpfermoleküle kovalent miteinander verbunden sind.

**13.** Kondensator (1) nach Anspruch 11 oder 12, wobei der Anteil an Wiederholeinheiten, an welche ein Verknüpfermolekül kovalent gebunden ist, zwischen 5% und 99 % beträgt.

**14.** Kondensator (1) nach einem der Ansprüche 11 bis 13, wobei die Polymerhauptketten Acrylatwiederholeinheiten enthalten und wobei funktionelle Gruppen, welche kovalent an ein Verknüpfermolekül gebunden sind oder sich zu einer solchen Bindung eignen, über die Carboxylatgruppe der jeweiligen Acrylatwiederholeinheit in Form einer Esterbindung angebunden sind.

**15.** Kondensator (1) nach einem der Ansprüche 11 bis 14, wobei der Anteil an Wiederholeinheiten, welche mit einem Verknüpfermolekül über eine funktionelle Gruppe kovalent verbunden sind, relativ zu der Summe aus diesen Wiederholeinheiten und den Wiederhohleinheiten, mit einer funktionellen Gruppen, die sich zur kovalenten Verbindung zu einem Verknüpfermolekül eignet, zwischen 25% und 99 % beträgt.

**16.** Kondensator (1) nach einem der Ansprüche 11 bis 15, wobei die kovalente Verbindung ausgewählt ist aus einer Etherbrücke, einer Esterbrücke, einer Aminbrücke, einer Amidbrücke und einer Thioetherbrücke.

**17.** Verfahren zur Herstellung eines Dielektrikums für einen Kondensator (1) umfassend die Schritte:

- Bereitstellen von Polymerketten mit reaktiven Gruppen die von der jeweiligen Polymerkette abzweigen und dazu geeignet sind, eine kovalente Bindung mit einem Verknüpfermolekül zu bilden,
- Zugabe von Verknüpfermolekülen zu den Polymerketten, wobei jedes Verknüpfermolekül mindestens zwei chemische Verknüpfungspunkte aufweist, die jeweils dazu geeignet sind, eine kovalente Bindung mit einer reaktiven Gruppe zu bilden,
- Vernetzung der Polymerketten durch kovalente Verbindung eines Verknüpfermoleküls mit mindestens zwei reaktiven Gruppen.

## Claims

**1.** Method for producing a capacitor (1), comprising the production of a dielectric layer (2) and applying at least one electrode (3, 4) to one side of the dielectric layer (2), the production of the dielectric layer (2) comprising the following steps:

- providing polymer chains having reactive groups that branch off from the respective polymer chain and are suitable for forming a covalent bond with a linker molecule,
- adding linker molecules to the polymer chains, wherein each linker molecule has at least two chemical linkage points, each of which is suitable for forming a covalent bond with a reactive group,
- crosslinking the polymer chains via covalent connection of a linker molecule with at least two reactive groups.

**2.** Method according to Claim 1, wherein a proportion of repeating units having a reactive group, based on all repeating units, is between 20% and 100%.

3. Method according to either of Claims 1 and 2, wherein the proportion of reactive groups covalently attached to a linker molecule is 25% to 99%.

4. Method according to any of Claims 1 to 3, wherein at least some of the repeating units bearing a reactive group are acrylate repeating units, and wherein, in the acrylate repeating units, the reactive group is connected via the carboxylate group of the acrylate repeating unit in the form of an ester linkage.

5. Method according to any of Claims 1 to 4, wherein the reactive group comprises an epoxide and the linker molecules comprise functional groups selected from carboxylic acids, amines, alcohols and anhydrides.

6. Method according to any of Claims 1 to 4, wherein the crosslinking involves an $S_N1$ or $S_N2$ reaction or an addition-elimination mechanism.

7. Method according to any of Claims 1 to 4, wherein the crosslinking involves a Markovnikov addition or an anti-Markovnikov addition.

8. Method according to any of Claims 1 to 7, which comprises a step of deposition from solution or of reactive extrusion.

9. Method according to any of Claims 1 to 8, wherein the polymer chain is a copolymer comprising acrylate repeating units and repeating units having a nonpolar group, and wherein the nonpolar group is selected from unsaturated or aromatic groups, and the proportion of acrylate repeating units is 20% to 80%.

10. Method according to any of Claims 1 to 9, wherein the crosslinking is effected by heat treatment at a temperature suitable for bringing about a crosslinking reaction, this being to an extent of over 99% based on the component selected from reactive groups and linker molecules and present in a smaller proportion in terms of reaction equivalents.

11. Wound capacitor (1), in which a first electrode (3) is arranged on one side of the dielectric layer (2), wherein the dielectric layer (2) and the electrode (3) are rolled up to form a capacitor roll, wherein the dielectric layer (2) comprises a polymer material in which polymer main chains or various sections of a polymer main chain are covalently attached to one another via bridging linker molecules.

12. Multilayer capacitor, in which electrodes (3, 4) are stacked alternately with dielectric layers (2) and wherein the electrodes (3, 4) are contacted via external contacts (5, 6), wherein the dielectric layers (2) each comprise a polymer material in which polymer main chains or various sections of a polymer main chain are covalently attached to one another via bridging linker molecules.

13. Capacitor (1) according to Claim 11 or 12, wherein the proportion of repeating units to which a linker molecule is covalently bonded is between 5% and 99%.

14. Capacitor (1) according to any of Claims 11 to 13, wherein the polymer main chains contain acrylate repeating units and wherein functional groups that are covalently bonded to a linker molecule or are suitable for such an attachment are connected via the carboxylate group of the respective acrylate repeating unit in the form of an ester linkage.

15. Capacitor (1) according to any of Claims 11 to 14, wherein the proportion of repeating units covalently attached to a linker molecule via a functional group relative to the sum total of said repeating units and the repeating units having a functional group suitable for the covalent attachment to a linker molecule is between 25% and 99%.

16. Capacitor (1) according to any of Claims 11 to 15, wherein the covalent attachment is selected from an ether bridge, an ester bridge, an amine bridge, an amide bridge and a thioether bridge.

17. Method for producing a dielectric for a capacitor (1), comprising the steps of:

- providing polymer chains having reactive groups that branch off from the respective polymer chain and are suitable for forming a covalent bond to a linker molecule,
- adding linker molecules to the polymer chains, wherein each linker molecule has at least two chemical linkage points, each of which is suitable for forming a covalent bond with a reactive group,
- crosslinking the polymer chains via covalent connection of a linker molecule with at least two reactive groups.

## Revendications

1. Procédé de fabrication d'un condensateur (1), comprenant la fabrication d'une couche diélectrique (2) et la mise en place d'au moins une électrode (3, 4) sur un côté de la couche diélectrique (2), la fabrication de la couche diélectrique (2) présentant les étapes suivantes :

    - la fourniture de chaînes polymères présentant des groupes réactifs qui se ramifient à partir de la chaîne polymère respective et sont aptes à former une liaison covalente avec une molécule de liaison,
    - l'ajout de molécules de liaison aux chaînes polymères, chaque molécule de liaison présentant au moins deux points de liaison chimiques qui sont chacun aptes à former une liaison covalente avec un groupe réactif,
    - la réticulation des chaînes polymères par liaison covalente d'une molécule de liaison avec au moins deux groupes réactifs.

2. Procédé selon la revendication 1, la proportion d'unités répétitives présentant un groupe réactif par rapport à l'ensemble des unités répétitives étant comprise entre 20 % et 100 %.

3. Procédé selon l'une des revendications 1 ou 2, la proportion de groupes réactifs qui sont liés par liaison covalente à une molécule de liaison étant comprise entre 25 % et 99 %.

4. Procédé selon l'une des revendications 1 à 3, au moins une partie des unités répétitives portant un groupe réactif étant des unités répétitives d'acrylate, et, dans les unités répétitives d'acrylate, le groupe réactif étant lié par l'intermédiaire du groupe carboxylate de l'unité répétitive d'acrylate sous la forme d'une liaison ester.

5. Procédé selon l'une des revendications 1 à 4, le groupe réactif contenant un époxyde et les molécules de liaison contenant des groupes fonctionnels sélectionnés parmi les acides carboxyliques, les amines, les alcools et les anhydrides.

6. Procédé selon l'une des revendications 1 à 4, une réaction $S_N1$ ou $S_N2$ ou un mécanisme d'addition-élimination intervenant dans la réticulation.

7. Procédé selon l'une des revendications 1 à 4, une addition de Markovnikov ou une addition anti-Markovnikov intervenant dans la réticulation.

8. Procédé selon l'une des revendications 1 à 7, présentant une étape de dépôt à partir d'une solution ou d'extrusion réactive.

9. Procédé selon l'une des revendications 1 à 8, la chaîne polymère étant un copolymère présentant des unités répétitives d'acrylate et des unités répétitives présentant un groupe apolaire, le groupe apolaire étant sélectionné parmi des groupes insaturés ou aromatiques, et la proportion d'unités répétitives d'acrylate étant comprise entre 20 et 80 %.

10. Procédé selon l'une des revendications 1 à 9, la réticulation étant réalisée par recuit à une température apte à provoquer une réaction de réticulation, et ce à un degré supérieur à 99 % par rapport au composant présent en plus faible proportion en termes d'équivalents de réaction, sélectionné parmi les groupes réactifs et les molécules de liaison.

11. Condensateur bobiné (1), dans lequel une première électrode (3) est disposée sur un côté de la couche diélectrique (2), la couche diélectrique (2) et l'électrode (3) étant enroulées en une bobine de condensateur, la couche diélectrique (2) présentant un matériau polymère dans lequel des chaînes principales polymères ou différentes sections d'une chaîne principale polymère sont reliées entre elles par liaison covalente au moyen de molécules de liaison formant des ponts.

12. Condensateur multicouche, dans lequel des électrodes (3, 4) sont empilées en alternance avec des couches diélectriques (2) et les électrodes (3, 4) sont mises en contact par l'intermédiaire de contacts extérieurs (5, 6), les couches diélectriques (2) présentant chacune un matériau polymère dans lequel des chaînes principales polymères ou différentes sections d'une chaîne principale polymère sont reliées entre elles par liaison covalente par l'intermédiaire de molécules de liaison formant des ponts.

**13.** Condensateur (1) selon la revendication 11 ou 12, la proportion d'unités répétitives auxquelles une molécule de liaison est liée par liaison covalente étant comprise entre 5 % et 99 %.

**14.** Condensateur (1) selon l'une des revendications 11 à 13, les chaînes principales polymères contenant des unités répétitives d'acrylate et des groupes fonctionnels qui sont liés par liaison covalente à une molécule de liaison ou sont aptes à former une telle liaison étant liés par l'intermédiaire du groupe carboxylate de l'unité répétitive d'acrylate respective sous la forme d'une liaison ester.

**15.** Condensateur (1) selon l'une des revendications 11 à 14, la proportion d'unités répétitives qui sont liées par liaison covalente à une molécule de liaison par l'intermédiaire d'un groupe fonctionnel, par rapport à la somme de ces unités répétitives et des unités répétitives présentant un groupe fonctionnel apte à former une liaison covalente avec une molécule de liaison, étant comprise entre 25 % et 99 %.

**16.** Condensateur (1) selon l'une des revendications 11 à 15, la liaison covalente étant sélectionnée parmi un pont éther, un pont ester, un pont amine, un pont amide et un pont thioéther.

**17.** Procédé de fabrication d'un diélectrique pour un condensateur (1), comprenant les étapes suivantes :

- la fourniture de chaînes polymères présentant des groupes réactifs qui se ramifient à partir de la chaîne polymère respective et sont aptes à former une liaison covalente avec une molécule de liaison,
- l'ajout de molécules de liaison aux chaînes polymères, chaque molécule de liaison présentant au moins deux points de liaison chimiques qui sont chacun aptes à former une liaison covalente avec un groupe réactif,
- la réticulation des chaînes polymères par liaison covalente d'une molécule de liaison avec au moins deux groupes réactifs.

Fig 1

1
3
2
4

Fig 2

Verzweigte Polymerketten
Unvernetzt
Verzweigte Polymerketten
Leicht vernetzt
Verzweigte Polymerketten
Stark vernetzt

Fig 3

R1
O
O
R2

Fig 4

Fig 5

Fig 6

Fig 7

Fig 8

O
O
n
+
NH2
NH2

Fig 9

Fig 10

Cl
O
$R_1$
n
+
$NH_2$
$NH_2$

Fig 11

Cl
O
R1
n
+
HO
OH

Fig 12

HS
H
N
O
R1
n
+

Fig 13

n
+
HS
O
O
O
O
SH

Fig 14

A
B
C
B
D
E

Fig 15

100
80
60
40
20
0
Masse [%]
100
200
300
400
500
Temperatur [°C]

Fig 16

100
80
60
40
20
0
Masse [%]
100
200
300
400
500
Temperatur [°C]

Fig 17

0,1
0,08
0,06
0,04
0,02
0
tanδ
130°C
VG0%
VG>70%
150°C
VG>70%
10^3
10^4
10^5
10^6
f [Hz]

Fig 18

6
5
4
3
εr
150°C
VG>70%;GA>70%
VG<70%;GA<70%
10^3
10^4
10^5
10^6
f [Hz]

Fig 19

99,9
99
90
50
10
5
1
Wahrscheinlichkeit (%)
250
500
750
1000
V/µm

Fig 20

1
5
6
2
3
4

Fig 21

1
5
6
2
3
4
7

Fig 22

1
5
6
2
3
4
7

Fig 23

1
5
6
2
9
8
3
4

Fig 24

1
2
3
4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **WENTAO XU,SHI-WOO RHEE**. Hysteresis-free organic field-effect transistors with high. *Organic Electronics*, 2010, vol. 11 (5), ISSN 1566-1199, 836-845